# EUROPEAN PATENT APPLICATION

(11) **EP 4 822 665 A1**
(43) Date of publication of application: **14.10.2026**
(21) Application number: 25830117.5
(22) Date of filing: 07.01.2025
(51) Int. Cl.: G07G 1/00, G06Q 20/20, G07G 1/12

(54) **INFORMATION PROCESSING DEVICE, INFORMATION PROCESSING SYSTEM, AND COMPUTER-READABLE STORAGE MEDIUM**

(30) Priority: 21.06.2024 JP 2024100538
(71) Applicant: Toshiba TEC Kabushiki Kaisha, Tokyo 141-8562 (JP)
(72) Inventor: HIRAMATSU, Naotake, Tokyo 141-8562 (JP)
(74) Representative: Bandpay & Greuter
(86) International application number: PCT/JP2025/000199
(87) International publication number: WO 2025/262987

(57) **Abstract**

An object is to enable inexpensive and easy notification of payment evasion. An information processing apparatus includes a detection unit, a tracking unit, an association unit, and a notification unit. The detection unit is configured to detect, based on image information for identifying respective states of a plurality of transaction processing apparatuses on which customers carry out a purchase-related interaction, whether or not each of the plurality of transaction processing apparatuses is in a completed state of the purchase-related interaction. The tracking unit is configured to track movement of the customers. The association unit is configured to associate, based on locations of the customers being tracked, each of the customers with a corresponding one of the transaction processing apparatuses on which the customer carries out the purchase-related interaction. The notification unit is configured to issue a payment evasion notification if a state of the transaction processing apparatus associated with the customer who has moved to a designated location set in advance is not the completed state of the purchase-related interaction.

## Description

### FIELD

An embodiment of the present invention relates to an information processing apparatus, an information processing system, and a computer-readable storage medium storing thereon a program for causing a computer to function as an information processing apparatus.

### BACKGROUND

There is a conventionally known semi self-checkout system in which a shop staff performs a registration process of products to be bought on a registration terminal, and a customer performs a checkout process of the products, namely, a purchase-related interaction, on a checkout terminal on his or her own. In recent years, a full self-checkout system in which a customer performs the registration process as well as the checkout process on his or her own has also become familiar.

In such self-checkout systems, there is a possibility that the customer may leave without completing the payment after registration of the products, namely, a payment evasion fraud may be committed.

### CITATION LIST

### PATENT LITERATURE

[PLT 1] Jpn. Pat. Appln. KOKAI Publication No. 2018-136679

### SUMMARY

An object to be solved by the embodiments of the present invention is to provide an information processing apparatus and an information processing system for enabling a payment evasion notification to be issued with ease.

### BRIEF DESCRIPTION OF THE DRAWINGS

FIG. 1 is a schematic configuration diagram showing a self-checkout system to which an information processing system according to a first embodiment, including a monitoring apparatus to which an information processing apparatus according to the first embodiment is applied, is applied.
FIG. 2 is a schematic diagram showing an example of a checkout area in a shop.
FIG. 3 is a perspective view showing an example of an external appearance configuration of a self-service POS terminal as a transaction processing apparatus included in the self-checkout system.
FIG. 4 is a block diagram showing a main circuit configuration of the self-service POS terminal.
FIG. 5 is a perspective view showing an example of an external appearance configuration of a self-checkout terminal as a transaction processing apparatus included in the self-checkout system.
FIG. 6 is a diagram for illustrating status information of the transaction processing apparatus represented by a color pattern and a light emission pattern of a rotating warning light included in the transaction processing apparatus.
FIG. 7 is a block diagram showing a main circuit configuration of a monitoring apparatus.
FIG. 8 is a schematic diagram showing a principal data structure stored in a tracking table of the monitoring apparatus.
FIG. 9 is a schematic diagram showing a principal data structure stored in an association table of the monitoring apparatus.
FIG. 10 is a sequence diagram for illustrating a fraud detection operation in a self-checkout system to which the information processing system according to the first embodiment is applied.
FIG. 11 is a flowchart showing an example of a main procedure for a tracking process executed by a processor of the monitoring apparatus.
FIG. 12 is a flowchart showing an example of a main procedure for a payment evasion detection process executed by the processor of the monitoring apparatus.
FIG. 13 is a diagram showing an example of a monitoring screen displayed on a touch panel of an attendant terminal.
FIG. 14 is a diagram showing an example of a monitoring screen upon receipt of an alert notification.
FIG. 15 is a flowchart showing an example of a main procedure for a payment evasion detection process executed by a processor of a monitoring apparatus to which an information processing apparatus according to a second embodiment is applied.
FIG. 16 is a diagram showing an example of an idle screen displayed on a touch panel of a self-service POS terminal as an example of a transaction processing apparatus according to a third embodiment.
FIG. 17 is a diagram showing an example of a transaction start screen displayed on the touch panel of a similar self-service POS terminal.
FIG. 18 is a diagram showing an example of a registration screen displayed on the touch panel of a similar self-service POS terminal.
FIG. 19 is a diagram showing an example of a payment selection screen displayed on the touch panel of a similar self-service POS terminal.
FIG. 20 is a diagram showing an example of a transaction end screen displayed on the touch panel of a similar self-service POS terminal.
FIG. 21 is a schematic configuration diagram showing a self-checkout system to which an information processing system according to a fourth embodiment, including a monitoring apparatus to which an information processing apparatus according to a fourth embodiment is applied, is applied.
FIG. 22 is a schematic diagram showing an example of a checkout area in a shop according to the fourth embodiment.

### DETAILED DESCRIPTION

In one embodiment, an information processing apparatus includes a detection unit, a tracking unit, an association unit, and a notification unit. The detection unit is configured to detect, based on image information for identifying respective states of a plurality of transaction processing apparatuses on which customers carry out a purchase-related interaction, whether or not each of the plurality of transaction processing apparatuses is in a completed state of the purchase-related interaction. The tracking unit is configured to track movement of the customers. The association unit is configured to associate, based on locations of the customers being tracked, each of the customers with a corresponding one of the transaction processing apparatuses on which the customer carries out the purchase-related interaction. The notification unit is configured to issue a payment evasion notification if a state of the transaction processing apparatus associated with the customer who has moved to a designated location set in advance is not the completed state of the purchase-related interaction.

Hereinafter, embodiments of the information processing apparatus and the information processing system will be described with reference to the accompanying drawings.

### [First Embodiment]

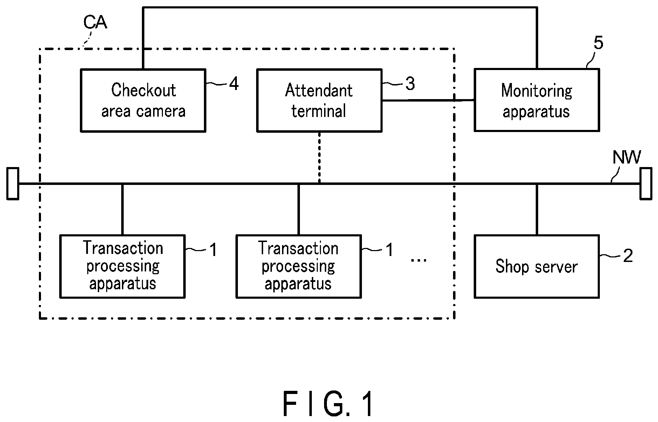

FIG. 1 is a schematic configuration diagram showing a self-checkout system to which an information processing system according to a first embodiment is applied. The self-checkout system includes a plurality of self-service transaction processing apparatuses 1 and a shop server 2, which are connected through a communication network NW such as a local area network (LAN). The information processing system according to the first embodiment as an informing system includes an attendant terminal 3, a checkout area camera 4, and a monitoring apparatus 5 to which an information processing apparatus according to the first embodiment is applied. The monitoring apparatus 5 is connected to the attendant terminal 3 and the checkout area camera 4. The attendant terminal 3 may also be connected to the plurality of transaction processing apparatuses 1 and the shop server 2 through the communication network NW, as shown in FIG. 1 by the dashed line.

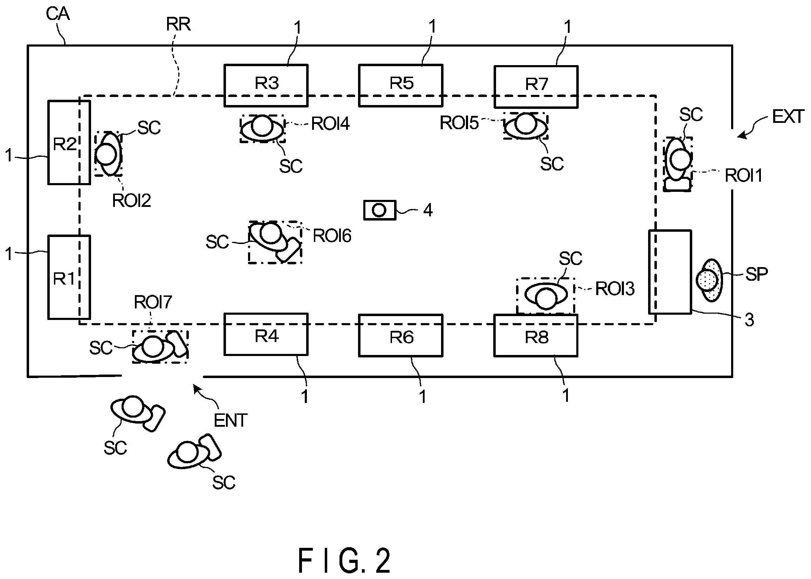

The plurality of transaction processing apparatuses 1, the attendant terminal 3, and the checkout area camera 4 are installed in a checkout area CA in a shop, as enclosed by the dash-dot line in FIG. 1. FIG. 2 is a schematic diagram showing an example of the checkout area CA. In the example of FIG. 2, eight transaction processing apparatuses 1 and one attendant terminal 3 are installed in the checkout area CA. Hereinafter, configurations and operations will be described based on the above-described number and installation layout of the transaction processing apparatuses 1 in the checkout area CA; however, the configuration is not limited thereto.

In the checkout area CA, an entrance ENT and an exit EXT for shoppers are set. At the entrance ENT, terminal numbers R1 to R8 for uniquely identifying the respective transaction processing apparatuses 1 are assigned. The terminal numbers R1 to R8 may be freely assigned by a manager of the shop server 2. At the attendant terminal 3, a shop staff SP is arranged.

The self-service transaction processing apparatus 1 is a terminal on which a customer SC carries out an interaction related to a checkout process. As the self-service transaction processing apparatus 1, there are a self-service point-of-sales (POS) terminal equipped with a product registration function and a payment function to allow a customer SC as a shopper to perform, on his or her own, both a product registration process and a checkout process based on registered transaction data, and a self-checkout terminal for enabling the customer SC to perform a checkout process on his or her own based on product transaction data separately registered by a shop staff or the customer SC. The checkout terminal may also be called a checkout apparatus, a payment terminal, a payment apparatus, a purchase apparatus, a purchase terminal, or the like. The POS terminal may also be called a product registration checkout terminal, a product registration checkout apparatus, a product registration payment terminal, a product registration payment apparatus, a product registration purchase apparatus, a product registration purchase terminal, or the like.

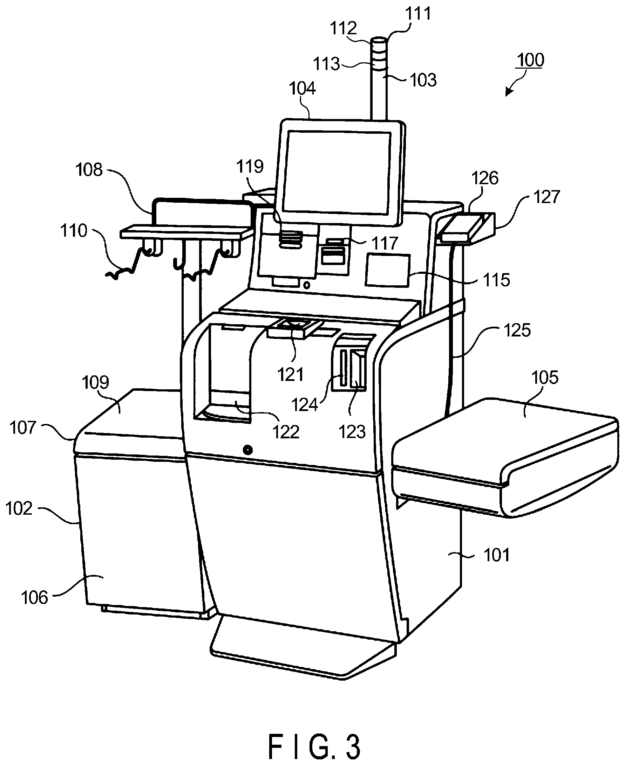

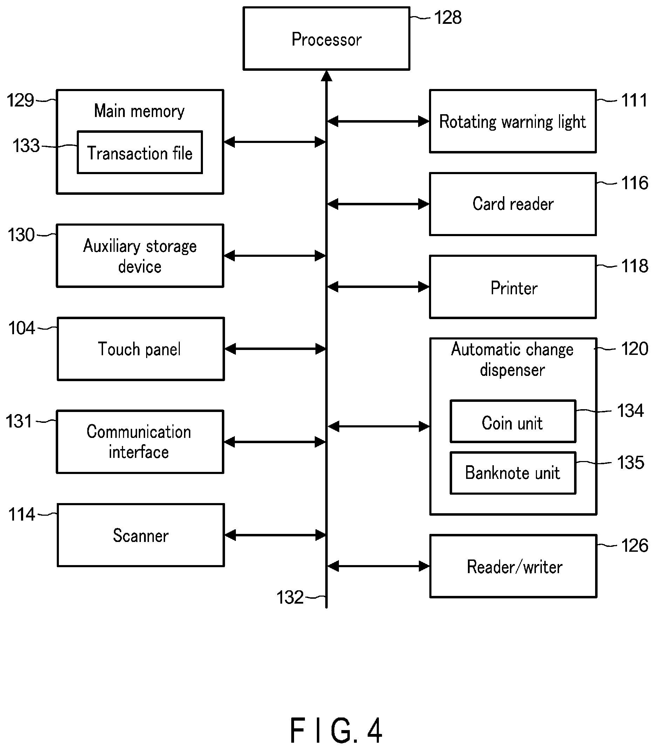

FIG. 3 is a perspective view showing an example of an external appearance configuration of a self-service POS terminal 100 as the transaction processing apparatus 1 included in the self-checkout system, and FIG. 4 is a block diagram showing an example of a main circuit configuration of the self-service POS terminal 100.

As shown in FIG. 3, the self-service POS terminal 100 includes a main body 101 installed on a floor surface and a weighing unit 102 installed beside the main body 101. The main body 101 includes a display pole 103 and a touch panel 104 attached to its upper part. The main body 101 includes a basket shelf 105 provided at a central part on a side surface opposite to a side on which the weighing unit 102 is installed. The basket shelf 105 is designed for the customer SC as a shopper coming over from a selling space to place on it a shopping basket or the like with products to be bought. The customer SC stands in front of the main body 101, as depicted in FIG. 3, so as to be able to look at the screen of the touch panel 104 and performs procedures. It thus follows that, as viewed from the customer SC, the basket shelf 105 is at the right and the weighing unit 102 is at the left, with the main body 101 interposed therebeween. In the description that follows, a side on which the customer SC stands will be referred to as in "front" of the main body 101, a side on which the weighing unit 102 is installed will be referred to as "left" of the main body 101, and a side on which the basket shelf 105 is provided will be referred to as "right" of the main body 101.

The weighing unit 102 has a structure in which a weighting plate 107 is provided at an upper part of a housing 106, and a bag holder 108 is attached to an upper part of the weighting plate 107. The weighting plate 107 includes, at its upper surface, a placement surface 109. The bag holder 108 includes a pair of holding arms 110 configured to hold a plastic bag or a reusable bag (so-called "eco-bag") brought by the customer SC. The weighing unit 102 is configured to measure weights of the products put into the plastic bag held by the holding arms 110 or the reusable bag put on the placement surface 109. The placement surface 109 is an example of a product arrangement area where products to be bought are arranged for checkout. The weighing unit 102 is an example of weighing equipment configured to measure a weight of an object placed in the product arrangement area.

The display pole 103 includes, at its distal portion, a rotating warning light 111 configured to indicate status information representing a state of the self-service POS terminal 100. The rotating warning light 111 includes, for example, a first light-emitting portion 112 configured to selectively emit blue and red lights, and a second light-emitting portion 113 configured to emit a yellow light. The lights are emitted in two types of light emission patterns: "steady" in which light is continuously emitted; and "blinking" in which light is repeatedly turned on and off at regular intervals. The rotating warning light 111 is configured to be able to indicate status information based on a combination of the color pattern and the light emission pattern of the first light-emitting portion 112 and the light emission pattern of the second light-emitting portion 113.

The touch panel 104 is configured of a display for displaying various screens related to transactions, such as registration and checkout, for a user who interacts with the self-service POS terminal 100, and a touch sensor for detecting the user's touch input to the screen. The user of the self-service POS terminal 100 is normally the customer SC.

In front of the main body 101, a reading window 115 of a scanner 114 (see FIG. 4), a card insertion slot 117 of a card reader 116 (see FIG. 4), and an issuance slot 119 for a receipt printed by a printer 118 (see FIG. 4) are formed. In front of the main body 101, a coin insertion slot 121, a coin outlet 122, a banknote inlet 123, and a banknote outlet 124 of an automatic change dispenser 120 (see FIG. 4) are further formed.

Also, a communication cable 125 extends from a right side surface of the main body 101 to the outside, and a reader/writer 126 for electronic money media is connected to a distal end of the communication cable 125. The reader/writer 126 is placed on a stand 127 provided at an upper part on the right side surface of the main body 101.

As shown in FIG. 4, the self-service POS terminal 100 includes a processor 128, a main memory 129, an auxiliary storage device 130, a communication interface 131, and a system transmission path 132, in addition to the touch panel 104, the rotating warning light 111, the scanner 114, the card reader 116, the printer 118, the automatic change dispenser 120, and the reader/writer 126 described above. The system transmission path 132 includes an address bus, a data bus, a control signal line, and the like. The system transmission path 132 connects the processor 128 with other units either directly or through a signal input/output circuit, and transmits a data signal to be exchanged therebetween. Through connection of the processor 128, the main memory 129, and the auxiliary storage device 130 via the system transmission path 132, a computer of the self-service POS terminal 100 is configured.

The processor 128 corresponds to a central nerve part of the computer. The processor 128 is configured to control each unit to realize various functions of the self-service POS terminal 100, in accordance with an operating system or control programs. The processor 128 is, for example, a central processing unit (CPU). The processor 128 may be, for example, a microprocessing unit (MPU), a system on a chip (SoC), a digital signal processor (DSP), a graphics processing unit (GPU), an application-specific integrated circuit (ASIC), a programmable logic device (PLD), or a field-programmable gate array (FPGA). Alternatively, the processor 128 may be a combination of several of them.

The main memory 129 corresponds to a main storage part of the computer. The main memory 129 includes a non-volatile memory region and a volatile memory region. The main memory 129 is configured to store, in the non-volatile memory region, an operating system and control programs. There is also a case where the main memory 129 is configured to store data necessary for the processor 128 to control each unit in the non-volatile or volatile memory region. The main memory 129 uses the volatile memory region as a work area in which data is suitably rewritten by the processor 128. The non-volatile memory region is, for example, a read-only memory (ROM). The volatile memory region is, for example, a random-access memory (RAM). The main memory 129 is configured to store, for example, a transaction file 133.

The transaction file 133 is a data file for storing transaction data related to a single commerce transaction processed by the self-service POS terminal 100. The transaction file 133 is configured to store, for example, a transaction number, data on products to be purchased, a total number of items, a total monetary amount, a discount amount, a payment amount, and the like. The transaction number is a series of numbers issued for each commerce transaction processed by the self-service POS terminal 100. The data on products to be purchased is record data created for each product that is sold and bought in a commerce transaction identified by the transaction number. The data on products to be purchased is configured of entries such as a product code, a product name, a price, a number of items, a monetary amount, and the like. The number of items is the number of products to be purchased that are identified by the product code. The monetary amount is a monetary amount for the number of items to be purchased. The transaction file 133 is configured to store data on a plurality of products to be purchased. The total number of items is a sum of the number of items of the products to be purchased. The total monetary amount is a monetary amount that is a sum of the monetary amounts of the products to be purchased. The discount amount is a monetary amount discounted from the total monetary amount. The payment amount is a monetary amount obtained by subtracting the discount amount from the total monetary amount.

The auxiliary storage device 130 corresponds to an auxiliary storage part of the computer. The auxiliary storage device 130 may be, for example, an electrically erasable programmable read-only memory (EEPROM), a hard disk drive (HDD), a solid-state drive (SSD), or the like. The auxiliary storage device 130 is configured to save data to be used by the processor 128 to perform various processes, data created by processing at the processor 128, and the like. There is also a case where the auxiliary storage device 130 is configured to store the above-described control programs.

The communication interface 131 is configured to perform data communications with external equipment connected through a communication network NW, in accordance with a communication protocol set in advance. The external equipment is, for example, a shop server 2 or the like, and may include an attendant terminal 3.

The scanner 114 is configured to scan a code symbol from a product presented over the reading window 115. Each product being sold at the shop is given a code symbol to represent a product ID or the like for identifying the product in the form of a code. The code symbol is, for example, a barcode. The code symbol may be, for example, a two-dimensional data code. The scanner 114 may be either a type that scans the code symbol through laser light, or a type that scans the code symbol from an image captured with an imaging device.

The card reader 116 is configured to scan card data recorded on a card medium such as a credit card, a point card, or the like. The card reader 116 is configured to pull in the card medium inserted into the card insertion slot 117 into the main body 101, scan the card data, and then eject the card medium from the card insertion slot 117.

The printer 118 is configured to print receipt data or the like indicating details of a commerce transaction on receipt paper. The receipt paper on which the receipt data is printed is ejected from the issuance slot 119, cut by an unillustrated cutter, and issued as a receipt or proof of purchase.

The automatic change dispenser 120 includes a coin unit 134 and a banknote unit 135. The coin unit 134 is configured to sort and identify the coins inserted into the coin insertion slot 121 one-by-one by denomination, depositing them in individual storage bins. The coin unit 134 is configured, for example, to collect coins of the corresponding denomination from the storage bins based on change data, and dispense them into the coin dispensing port 122. The banknote unit 135 is configured to sort and identify the banknotes inserted into the banknote insertion slot 123 one-by-one by denomination, depositing them in individual storage bins. The banknote unit 135 is configured, for example, to collect banknotes of the corresponding denomination from the storage bins based on change data, and dispense them into the banknote dispensing port 124.

The reader/writer 126 is configured to scan and rewrite electronic money recorded on an electronic money media. The electronic money media is, for example, a noncontact IC card. The electronic money media may be an electronic device such as a smartphone, a tablet terminal, or the like.

The processor 128 is configured to implement known processing units associated with registration and payment of products. Each unit implemented by the processor 128 may also be referred to as a "function". In other words, each unit implemented by the processor 128 is implemented by a control unit including the processor 128 and the main memory 129.

In this manner, the self-service POS terminal 100 is equipped with a purchase function that allows both cash and cashless payment. The cashless payment includes credit card payment, electronic money payment, loyalty point payment, code payment, and the like. At the selling space where the products are displayed, the customer SC puts the products to be bought into a shopping bag or the like or puts them into a shopping cart, and then moves to a checkout area CA. After moving to the checkout area CA, the customer SC interacts with the self-service POS terminal 100, and registers the products to be bought and performs a checkout process for transaction data of the products to be bought that have been registered. In this manner, the customer SC performs the transaction from product registration to payment in a self-service manner.

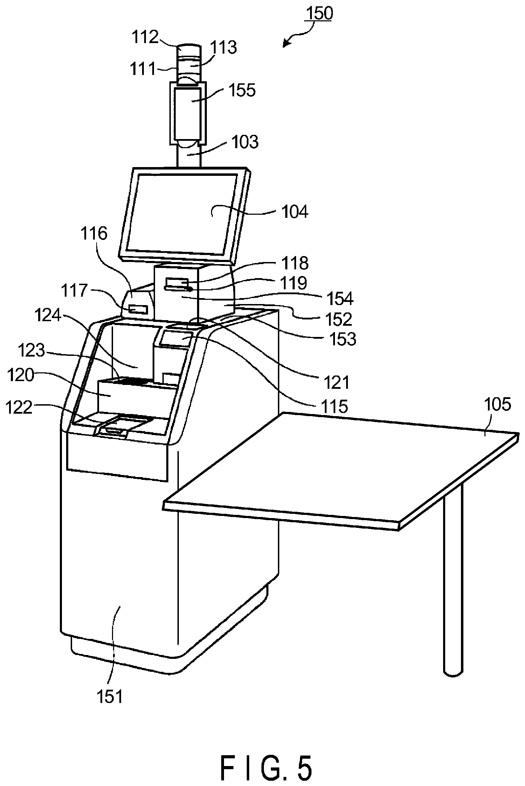

FIG. 5 is a perspective view showing an example of an external appearance configuration of a self-checkout terminal 150 as a transaction processing apparatus 1 included in a self-checkout system. The configurations similar to those of the self-service POS terminal 100 will be assigned the same reference numerals to omit explanations of such configurations.

The self-checkout terminal 150 includes a first housing 151 and a second housing 152.

In front of the first housing 151, the coin insertion slot 121, the coin dispensing port 122, the banknote insertion slot 123, and the banknote dispensing port 124 of the automatic change dispenser 120, as well as the reading window 115 of the scanner 114, are arranged. Note that the scanner 114 is not configured to scan a code symbol from a product as in the self-service POS terminal 100, but is used to scan a code symbol for code payment.

The second housing 152 is placed on an upper surface 153 of the first housing 151, and includes a printer 118. The printer 118 includes the issuance slot 119 for a receipt provided on a front surface 154 of the second housing 152.

On the upper surface 153 of the first housing 151 and at the left of the second housing 152, the card reader 116 including the card insertion slot 117 is disposed. Also, the touch panel 104 is attached to a portion above the second housing 152.

The self-checkout terminal 150 includes a cylindrical display pole 103 standing at the back of the upper surface 153 of the first housing 151. The display pole 103 includes, at its upper distal portion, the rotating warning light 111 including the first light-emitting portion 112 and the second light-emitting portion 113. The display pole 103 further includes, below the rotating warning light 111, a display device 155 for displaying images and characters. The display device 155 is configured of, for example, a liquid crystal panel. The display device 155 is configured, for example, to display details of an error that has occurred at the self-checkout terminal 150.

At the right of the self-checkout terminal 150 as viewed from the front, for example, a basket shelf 105 for placing thereon a shopping basket or the like is installed.

An attendant terminal 3 is a terminal that is interacted with by a shop staff SP as an attendant who monitors the checkout area CA. The attendant terminal 3 may be a personal computer connected to the monitoring apparatus 5 in a wired or wireless manner or a tablet terminal that can be wirelessly connected to the monitoring apparatus 5 and can be carried by a shop staff.

Moreover, the attendant terminal 3 may be connected to a communication network NW and equipped with a function of monitoring a plurality of transaction processing apparatuses 1. Furthermore, the attendant terminal 3 may include configurations similar to those of the self-service POS terminal 100. The attendant terminal 3 equipped with the monitoring function is configured to store a status of each self-service POS terminal 100 in the main memory 129. The attendant terminal 3 is configured, for example, to be able to store, in the main memory 129, a list of products to be bought registered in each self-service POS terminal 100, an error occurrence status, and the like. The attendant terminal 3 is configured to display the status of each self-service POS terminal 100 stored in the main memory 129 on a display of the touch panel 104. Also, the attendant terminal 3 can be equipped with a function of handling payments that require human intervention, such as payments with non-scannable cash-equivalent vouchers or merchant-specific vouchers, as well as returns and refunds, in addition to the cash and cashless payment function.

The shop server 2 includes a product master database and a sales data database, and is configured to provide various services related to the self-checkout system to the self-service POS terminals 100 connected via the communication network NW. The product master database is configured to save product data such as a product code, a product name, a unit price, a category name, and the like for each of the products being sold at the shop as an individual record. The product code is a unique code set for each of the products to individually identify the products. The sales data database is configured to save sales data of each transaction sent from each transaction processing apparatus 1 at the completion of payment, that is, at the end of a transaction. The sales data database is configured to save transaction data representing details of a transaction of products to be paid for and payment data related to payment of the transaction, for each of the transactions as an individual record. The transaction data includes product names (product codes) of products to be paid for and their prices, as well as the total monetary amount of each product. The payment data includes, in the case of cash payment, information on a deposit amount paid by the customer, an amount of change, or the like, and includes, in the case of cashless payment, information on the payment method. Also, the sales data may include elements such as a member code, a company code (a company name) indicating a company that manages the shop, a shop code (a shop name), a telephone number and an address of the shop, a date and time of transaction, a transaction number (a receipt number), a terminal number, a contact person name, and the like. The elements included in the sales data are not limited to the above-mentioned examples, and may include other elements, or exclude certain elements such as the telephone number and the address.

In the case of the self-service POS terminal 100, the transaction processing apparatus 1 is configured, for example, to scan, with the scanner 114, the code symbol printed on or attached to the product to retrieve the product code, and read product data for the product specified by the product code from the product data file included in the transaction processing apparatus 1. The self-service POS terminal 100 is configured to register the read product data in the transaction data, thereby storing updated sales data including the transaction data and the payment data. The product data file may be a copy of the product master database included in the shop server 2. In the case where the transaction processing apparatus 1 is a self-checkout terminal 150, transaction data registered by an unillustrated registration terminal is received and stored. Alternatively, a paper medium with a code indicating transaction data registered by an unillustrated registration terminal printed thereon is scanned by a scanner of the self-checkout terminal 150. Thereby, the self-checkout terminal 150 registers the transaction data, and proceeds to the subsequent checkout process. In this case, in place of the paper medium with a code indicating transaction data registered by an unillustrated registration terminal printed thereon, the following configuration may be adopted. That is, a screen of a mobile terminal owned by a consumer may be configured to display a code indicating transaction data to have the code scanned by the scanner of the self-checkout terminal 150, thereby registering the transaction data, and proceeding to the subsequent checkout process. After the checkout process is completed, that is, after a single transaction ends, the transaction processing apparatus 1 prints sales data on a paper sheet and issues a receipt for a single transaction, and sends the sales data for the single transaction to the shop server 2. The sales data database of the shop server 2 saves the sales data sent from each transaction processing apparatus 1 in the above-described manner.

The checkout area camera 4 is arranged on the ceiling or the like in the checkout area CA, as shown in FIG. 2, and is configured to capture video images of the entire checkout area CA and send the captured video images to the monitoring apparatus 5. The checkout area camera 4 may be, for example, an omnidirectional camera, a fisheye camera, or the like that provides 360-degree coverage. The checkout area camera 4 is installed in such a manner that all the transaction processing apparatuses 1 arranged in the checkout area CA, specifically, the rotating warning lights 111 of all the self-service POS terminals 100, fall in its coverage area. If all the rotating warning lights 111 cannot be photographed by a single checkout area camera 4, more than one checkout area camera 4 may be provided. The checkout area camera 4 is an example of a retrieving apparatus configured to retrieve image information for identifying respective states of a plurality of transaction processing apparatuses 1. As the checkout area camera 4, an existing monitoring camera installed in the checkout area CA may be used.

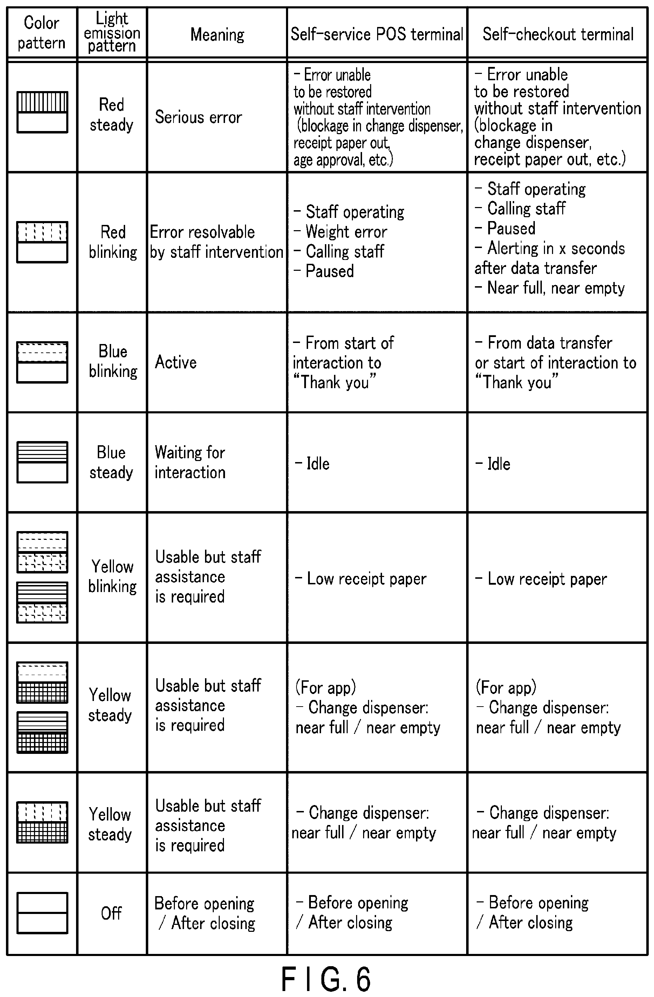

The monitoring apparatus 5 is configured to detect the state of each transaction processing apparatus 1 based on an image of the rotating warning light 111 of each of the transaction processing apparatuses 1 included in the video images captured by the checkout area camera 4. FIG. 6 is a diagram illustrating status information of the transaction processing apparatus 1, namely, the self-service POS terminal 100 and the self-checkout terminal 150, represented by a color pattern and a light emission pattern of the rotating warning light 111. Note that, in FIG. 6, steady lights are shown by the solid-line hatching, and blinking lights are shown by the dashed hatching. The rotating warning light 111 is configured to cause the first light-emitting portion 112 to emit a blue blinking light to indicate that the status is "active", and to emit a steady blue light to indicate that the status is "idle". This allows the monitoring apparatus 5 to recognize the color pattern and the light emission pattern of the rotating warning light 111 of each self-service POS terminal 100 based on the video images captured by the checkout area camera 4, and to determine the status of each self-service POS terminal. In this manner, the rotating warning light 111 is configured to be able to indicate whether the status of the transaction processing apparatus 1 is idle or active by means of at least one of the light emission color and the light emission state. Here, the "active" state refers to an unpaid status in which the payment has not been settled by the customer SC. Also, the "idle" state refers to a waiting state for use by the next customer SC after payment by the previous customer SC has been settled, namely, a state in which the payment has been settled by the previous customer SC. Accordingly, the rotating warning light 111 is an example of a display member configured to display whether the customer SC who is using or has used the transaction processing apparatus 1 is in an unpaid or paid status. In the present embodiment, an example is described where the rotating warning light 111 includes two light emitting portions, namely, the first light-emitting portion 112 and the second light-emitting portion 113; however, there may be only a single light emitting portion configured to indicate whether or not the status is an unpaid or paid status.

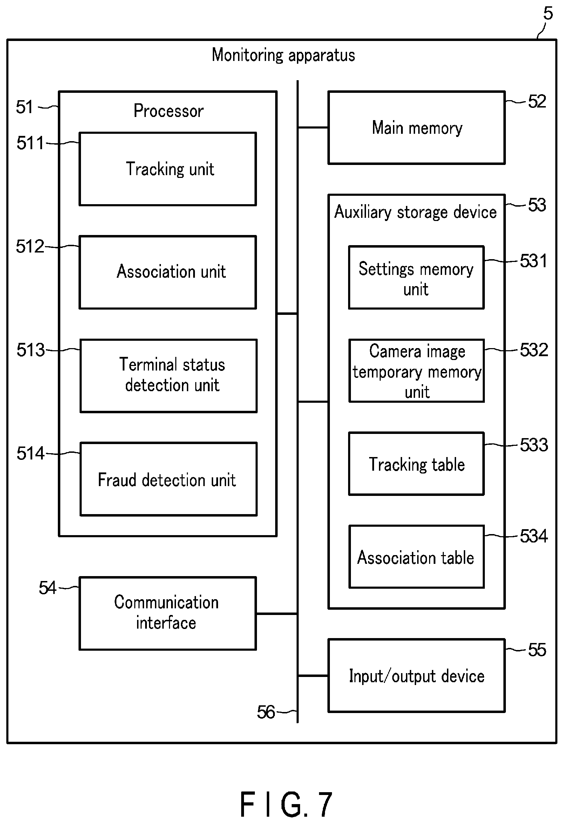

FIG. 7 is a block diagram showing an example of a main circuit configuration of the monitoring apparatus 5.

As shown in FIG. 7, the monitoring apparatus 5 includes a processor 51, a main memory 52, an auxiliary storage device 53, a communication interface 54, an input/output device 55, and a system transmission path 56. The system transmission path 56 includes an address bus, a data bus, a control signal line, and the like. The system transmission path 56 connects the processor 51 with other units either directly or through a signal input/output circuit, and transmits a data signal to be exchanged therebetween. Through connection of the processor 51, the main memory 52, and the auxiliary storage device 53 via a system transmission path 56, a computer of the monitoring apparatus 5 is configured. The computer is an example of the information processing apparatus according to the first embodiment.

The processor 51 corresponds to a central nerve part of the computer. The processor 51 is configured to control each unit to realize a variety of functions of the monitoring apparatus 5, in accordance with an operating system or application programs. The processor 51 is, for example, a CPU. The processor 51 may be a multicore/multi-thread type configured to perform a plurality of processes in parallel. The processor 51 may be, for example, an MPU, an SoC, a DSP, a GPU, an ASIC, a PLD, an FPGA, or the like. Alternatively, the processor 51 may be a combination of several of them.

The main memory 52 corresponds to the main storage part of the computer. The main memory 52 includes a non-volatile memory region and a volatile memory region. The main memory 52 stores, in the non-volatile memory region, an operating system or application programs. The application programs include, for example, an information processing program for causing the computer to function as the information processing apparatus according to the first embodiment. The non-volatile memory region is an example of a computer-readable storage medium storing thereon an information processing program for causing a computer to function as the information processing apparatus according to the first embodiment. There is also a case where the main memory 52 is configured to store data necessary for the processor 51 to control each unit in the non-volatile or volatile memory region. The main memory 52 uses the volatile memory region as a work area in which data is suitably rewritten by the processor 51. The non-volatile memory region is, for example, a ROM. The volatile memory region is, for example, a RAM.

The auxiliary storage device 53 corresponds to an auxiliary storage part of the computer. The auxiliary storage device 53 may be, for example, an EEPROM, an HDD, an SSD, or the like. The auxiliary storage device 53 is configured to save data to be used by the processor 51 to perform various processes, data created by processing at the processor 51, and the like. There is also a case where the auxiliary storage device 53 is configured to store the above-described control programs. In this case, the auxiliary storage device 53 is an example of a computer-readable storage medium storing thereon an information processing program for causing a computer to function as the information processing apparatus according to the first embodiment.

The communication interface 54 may be a general-purpose communication apparatus configured to communicate data with the attendant terminal 3 in wired or wireless manner. Also, the communication interface 54 may be equipped with a general video interface function for inputting video images captured by the checkout area camera 4.

The input/output device 55 is a user interface including input equipment such as a keyboard, a mouse, and the like, and display equipment such as a liquid crystal display. Note that the monitoring apparatus 5 is not required to include the input/output device 55. In this case, an unillustrated information processing terminal configured to be able to communicate via the communication interface 54 may be used as the user interface. The information processing terminal may include, for example, a personal computer, a smartphone, a tablet computer, or the like. Also, the communication interface 54 may be equipped with a function of communicating with the shop server 2 through the communication network NW to be able to use the user interface included in the shop server 2.

In the auxiliary storage device 53, the monitoring apparatus 5 includes, for example, a settings memory unit 531, a camera image temporary memory unit 532, a tracking table 533, and an association table 534.

The settings memory unit 531 is configured to store terminal numbers assigned to the respective transaction processing apparatuses 1. The settings memory unit 531 is further configured to store a designated location for detecting a customer SC who attempts to leave without finalizing the purchase. The designated location can be set in advance by a manager of the monitoring apparatus 5 through, for example, the input/output device 55. The designated location may be, for example, an outside of a rectangular regulation range RR enclosed by the dashed line in FIG. 2, set in advance for the checkout area CA. The shape of the regulation range RR may be freely set according to the arrangement of the checkout area CA. The designated location may be set as a location on the side of the entrance ENT or exit EXT in relation to a designated line freely set in the checkout area CA. That is, the designated location may be a location beyond the designated line on the side of the entrance ENT or exit EXT. The designated line may be, for example, one of the sides of the regulation range RR that is on the side of the entrance ENT or exit EXT. Moreover, the settings memory unit 531 is configured to store installation location information that is uniquely determined based on the arrangement of the transaction processing apparatuses 1 in the checkout area CA, such as a location of the rotating warning light 111 of each transaction processing apparatus 1 and an interaction range in which a customer SC who is interacting with each transaction processing apparatus 1 is expected to exist. Furthermore, the settings memory unit 531 may be configured to also store installation location information of the attendant terminal 3.

The camera image temporary memory unit 532 is configured to temporarily store video images of a predetermined duration captured by the checkout area camera 4.

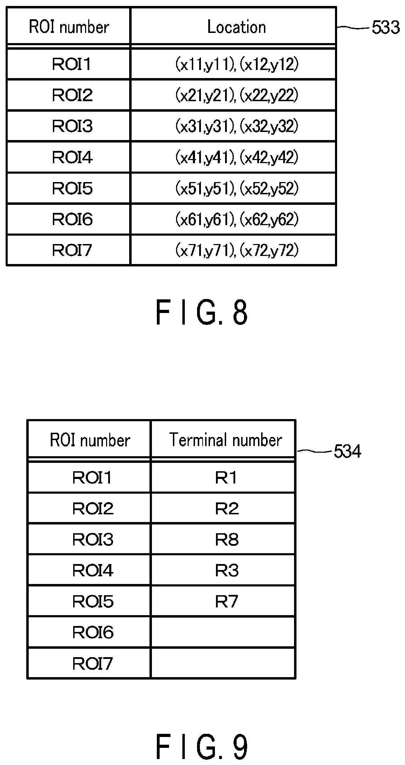

The tracking table 533 is configured to store locations of customers SC who have entered the checkout area CA. FIG. 8 is a schematic diagram showing a principal data structure stored in the tracking table 533. Note that the data structure shown in FIG. 8 is an example. The format of the data structure is not particularly limited, as long as information necessary for the processor 51 can be obtained. The processor 51 is configured to set, in the video images captured by the checkout area camera 4, rectangular regions of interest (ROI) by which images of the customers SC who have entered the checkout area CA are to be clipped, as shown by the dash-dot lines in FIG. 2, and assigns thereto ROI numbers for distinguishing the individual ROIs. Thus, the ROI numbers can be said to be customer numbers. As shown in FIG. 8, the tracking table 533 is configured, for example, to store coordinates of the locations of the customers SC who have entered the checkout area CA in the video images captured by the checkout area camera 4, indexed by the ROI numbers of the customers SC. The coordinates are, in the example of FIG. 8, coordinates of two opposing corners of the rectangular ROI; however, the configuration is not limited thereto.

The association table 534 is configured to store a correspondence relationship between the customers SC and the transaction processing apparatuses 1. FIG. 9 is a schematic diagram showing a principal data structure stored in the association table 534. Note that the data structure shown in FIG. 9 is an example. The format of the data structure is not particularly limited, as long as information necessary for the processor 51 can be obtained. The association table 534 is configured, for example, to store terminal numbers assigned to the respective transaction processing apparatuses 1, indexed by the ROI numbers specifying the customers SC, as shown in FIG. 9. There may be a case where an identical terminal number is stored for more than one ROI number. This happens in a situation where, for example, a married couple is shopping.

Next, each unit implemented by the processor 51 of the monitoring apparatus 5 will be described. As shown in FIG. 7, the processor 51 is configured to implement, for example, the tracking unit 511, the association unit 512, the terminal status detection unit 513, and the fraud detection unit 514. Each unit implemented by the processor 51 may also be referred to as a "function". In other words, each unit implemented by the processor 51 is implemented by a control unit including the processor 51 and the main memory 52.

The tracking unit 511 is configured to receive video images captured by the checkout area camera 4 via the communication interface 54, and to store the received video images in the camera image temporary memory unit 532. The video images include images of the rotating warning lights 111 of the respective transaction processing apparatuses 1, as well as images of customers moving within the checkout area CA. The tracking unit 511 is configured to cause the camera image temporary memory unit 532 to store video images of a duration by which it is possible to determine whether the rotating warning light 111 is emitting a blinking light or a steady light. In this manner, the tracking unit 511 is configured to be able to retrieve image information for identifying respective states of a plurality of transaction processing apparatuses 1 on which customers SC carry out a purchase-related interaction. Also, the tracking unit 511 is configured to track movement of the customers SC present in the checkout area CA from video images of a predetermined duration stored in the camera image temporary memory unit 532, and to cause the tracking table 533 to store information on the locations of the customers SC at that point in time. Accordingly, the tracking unit 511 is an example of a tracking unit configured to track movement of the customers SC.

The association unit 512 is configured to specify a customer SC who exists in the interaction range of each transaction processing apparatus 1 based on the information on the locations of the customers SC stored in the tracking table 533 and the installation location information of each transaction processing apparatus 1 stored in the settings memory unit 531. The association unit 512 is configured to register, in the association table 534, the specified customer SC who is interacting with the transaction processing apparatus 1. The association unit 512 is an example of an association unit configured to associate, based on the locations of the customers SC being tracked, each of the customers SC with a corresponding transaction processing apparatus 1 on which the customer SC carries out a purchase-related interaction.

The terminal status detection unit 513 is configured to detect statuses of the respective transaction processing apparatuses 1 based on video images of a predetermined duration stored in the camera image temporary memory unit 532. Specifically, the video images include images of the rotating warning lights 111 of the respective transaction processing apparatuses 1. In other words, the terminal status detection unit 513 is configured to retrieve, from the camera image temporary memory unit 532, image information for identifying respective states of a plurality of transaction processing apparatuses 1 on which customers SC carry out a purchase-related interaction. The terminal status detection unit 513 is configured to discern status information of each transaction processing apparatus 1 represented by a color pattern and a light emission pattern of the rotating warning light 111, based on retrieved images of the rotating warning lights 111 of the transaction processing apparatuses 1 shown in the video images of the predetermined duration. The terminal status detection unit 513 is configured to determine whether each transaction processing apparatus 1 is in use or idle, based on the determined status information. "Idle" refers to a state in which the previous customer SC has settled the payment, namely, a purchase-related interaction completed state, as described above. In this manner, the terminal status detection unit 513 is an example of a detection unit configured to detect, based on image information for identifying respective states of a plurality of transaction processing apparatuses 1 on which customers SC carry out a purchase-related interaction, whether or not each of the transaction processing apparatuses 1 is in the purchase-related interaction completed state.

The fraud detection unit 514 is configured to determine whether a payment evasion fraud has been committed, based on information on the locations of the customers SC stored in the tracking table 533, information on associations between the customers SC and the transaction processing apparatuses 1 stored in the association table 534, and statuses of the respective transaction processing apparatuses 1 detected by the terminal status detection unit 513. Specifically, the fraud detection unit 514 is configured to determine that a fraud has not been committed if a transaction processing apparatus 1 associated with a customer SC present in a designated location, namely, a customer SC who has exited a regulation range RR or crossed a designated line on the side of the entrance ENT or exit EXT, is idle, namely, in a purchase-related interaction completed state. On the other hand, the fraud detection unit 514 is configured to determine that a payment evasion fraud has been committed if the transaction processing apparatus 1 associated with the customer SC present in the designated location is active, namely, remains in a purchase-related interaction uncompleted state. If it is detected that a payment evasion fraud has been committed, the fraud detection unit 514 sends a payment evasion notification to the attendant terminal 3 through the communication interface 54. The fraud detection unit 514 is an example of a notification unit configured to issue a payment evasion notification if a transaction processing apparatus 1 associated with a customer SC who has moved to a designated location set in advance is not in a purchase-related interaction completed state. The "payment evasion" may also be called checkout evasion, non-checkout, transaction evasion, non-transaction, purchase evasion, non-purchase, or the like.

Note that the monitoring apparatus 5 can be realized by, for example, writing control programs into the main memory 52 or the auxiliary storage device 53 using a general-purpose computer apparatus as hardware. The control programs may be stored in the main memory 52 or the auxiliary storage device 53 at the time of transfer of the monitoring apparatus 5, or may be transferred separately from the general-purpose computer apparatus. In the latter case, the control programs are transferred through a network or through recording on a removable recording medium such as a magnetic disk, a magnetooptical disk, an optical disk, a semiconductor memory, or the like.

Hereinafter, the operations of the monitoring apparatus 5 and the information processing system with the above-described configurations will be described.

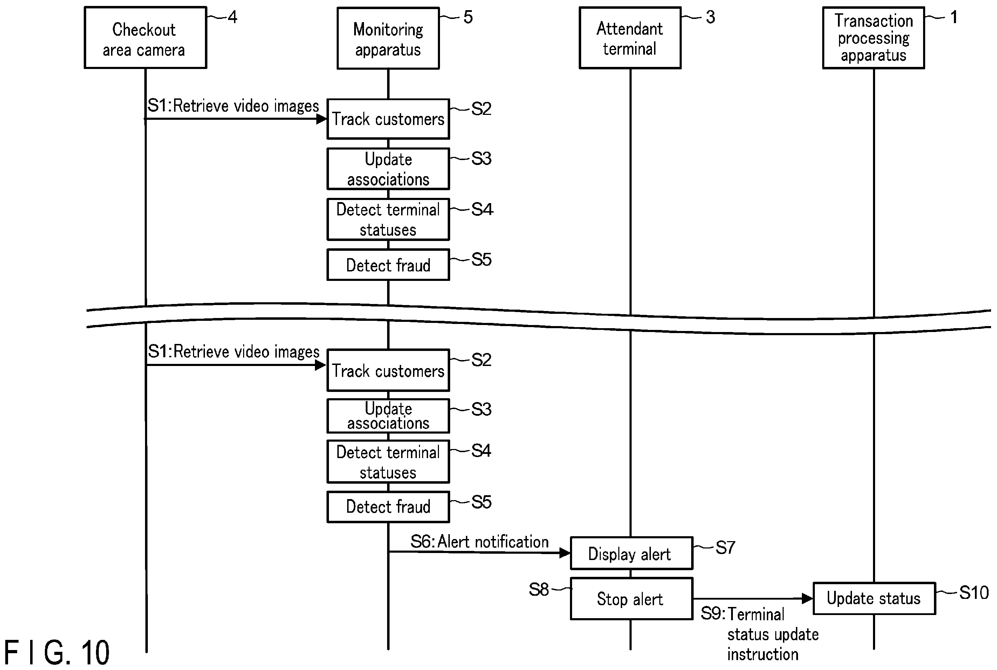

FIG. 10 is a sequence diagram for illustrating a fraud detection operation in a self-checkout system to which the information processing system according to the first embodiment is applied. In FIG. 10, only one of the transaction processing apparatuses 1 is shown as a representative.

As shown in FIG. 10, the monitoring apparatus 5 retrieves video images from the checkout area camera 4 (step S1).

Based on the video images, the monitoring apparatus 5 tracks customers SC in the checkout area CA (step S2). The monitoring apparatus 5 updates current locations of the customers SC stored in the tracking table 533 based on current locations of the customers SC being tracked. If an untracked, namely, new customer SC has entered the checkout area CA, the monitoring apparatus 5 assigns him or her a new ROI number and registers his or her current location in the tracking table 533.

Moreover, the monitoring apparatus 5 updates the associations between the customers SC and the transaction processing apparatuses 1 based on positional relationships between the current locations of the customers SC and the transaction processing apparatuses 1 (step S3). That is, if an unassociated customer SC has entered the interaction range of any one of the transaction processing apparatuses 1, the monitoring apparatus 5 registers an association between the customer SC and the transaction processing apparatus 1 in the association tracking table 533.

Also, the monitoring apparatus 5 detects statuses of the respective transaction processing apparatuses 1 based on images of rotating warning lights 111 of the respective transaction processing apparatuses 1 (step S4).

Subsequently, the monitoring apparatus 5 determines whether or not a payment-evasion fraud has been committed (step S5). Specifically, the monitoring apparatus 5 verifies, against the association tracking table 533, customers SC associated with the transaction processing apparatuses 1 that have been detected to be active, namely, those not in a purchase-related interaction completed state, and retrieves current locations of the verified customers SC from the tracking table 533. Whether or not a fraud has been committed is determined based on whether or not the retrieved current location of the customer SC is in the designated location, namely, has exited the regulation range RR, or crossed the designated line. If, for example, transaction processing apparatuses 1 with the terminal numbers R2, R3, R7, and R8 are active, locations of customers SC associated with these transaction processing apparatuses 1 are verified. At this time, in the case of the situation shown in FIG. 2, it is determined that a fraud has not been committed, since the customers SC associated with these transaction processing apparatuses 1 are not present in the designated location, namely, are within the regulation range RR or have not crossed the designated line.

Thereafter, the above-described operations from step S1 to step S5 are repeated. FIG. 10 illustrates a case where the operations at steps S4 and S5 are carried out in succession to the operations at steps S1 to S3; however, the operations at steps S4 and S5 may be performed each time the operations at steps S1 to S3 are performed multiple times. That is, the customer SC having exited the interaction range of each transaction processing apparatus 1 does not immediately mean that the customer SC has exited the regulation range RR or crossed the designated line. Accordingly, the operations at steps S1 to S3 and the operations at steps S4 and S5 are not necessarily in a one-to-one relationship.

Also, assuming, for example, that a transaction processing apparatus 1 with the terminal number R1 is active, in addition to the above-described transaction processing apparatuses 1 with the terminal numbers R2, R3, R7, and R8, in the case of the situation shown in FIG. 2, the monitoring apparatus 5 determines, at step S5, that a payment-evasion fraud has occurred, since the customer SC associated with the transaction processing apparatus 1 with the terminal number R1 is present in the designated location, namely, is out of the regulation range RR or has crossed the designated line. In such a case, the monitoring apparatus 5 sends an alert notification to the attendant terminal 3 (step S6). The alert notification includes information indicating the transaction processing apparatus 1 where the payment evasion has occurred, which is, in this example, the terminal number R1. The alert notification may include images of customers SC present in the designated location, which have been clipped from the video images.

Upon receiving the alert notification from the monitoring apparatus 5, the attendant terminal 3 displays the alert notification as, for example, a pop-up (step S7). The shop staff SP who has verified the alert notification performs, on the attendant terminal 3, a predetermined stop interaction to instruct the alert notification to be stopped (step S8), and then carries out a necessary procedure such as warning the customer SC in question. In response to the predetermined stop interaction, the attendant terminal 3 sends a terminal status update instruction to the transaction processing apparatus 1 in question (step S9).

Upon receiving the terminal status update instruction, the transaction processing apparatus 1 updates its status to "idle", and changes the rotating warning light 111 to indicate "idle" (step S10).

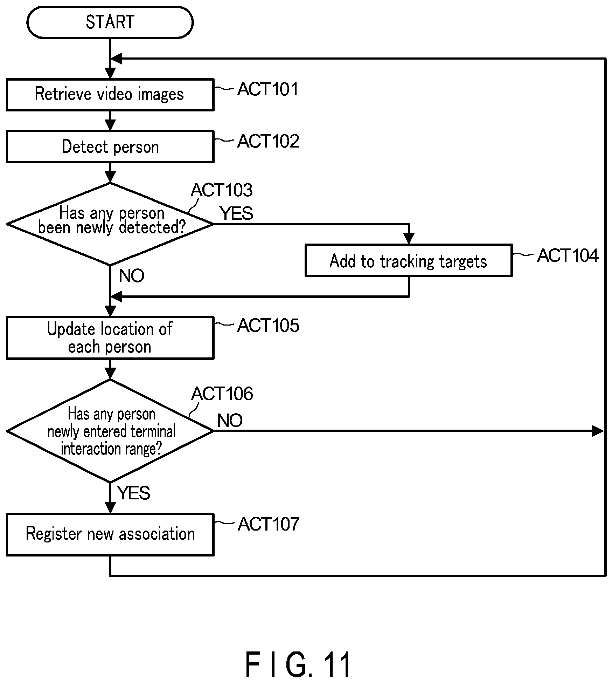

Hereinafter, operations of the monitoring apparatus 5 for realizing the above-described operations will be described. FIG. 11 is a flowchart showing an example of a main procedure for a tracking process executed by the processor 51 of the monitoring apparatus 5. It is assumed herein that the processing of the processor 51 shifts to ACT(n+1) after ACTn (where n is a natural number), unless otherwise explained. It is also to be noted that the procedure shown in FIG. 10 is an example. The procedure is not particularly limited, as long as similar results can be obtained.

At ACT101, the tracking unit 511 implemented by the processor 51 retrieves video images sent from the checkout area camera 4 via the communication network NW, through the communication interface 54. The tracking unit 511 stores the retrieved video images in the camera image temporary memory unit 532.

At ACT102, the tracking unit 511 detects a person present in the checkout area CA from the temporarily stored video images, using known moving object detection technology or human detection technology.

At ACT103, the tracking unit 511 determines whether or not there is a newly detected person. Specifically, the tracking unit 511 compares location information of a detected person with location information stored in the tracking table 533, and determines whether or not there is a person whose location information indicates a location beyond a distance, namely, a number of pixels, determined based on a detection time interval. Also, the range for which such determination is carried out in the checkout area CA may be limited to the vicinity of the entrance ENT. If there is no newly detected person, the tracking unit 511 determines NO at ACT103, and proceeds to processing at ACT105. If there is any newly detected person, the tracking unit 511 determines YES at ACT103, and proceeds to processing at ACT104.

At ACT104, the tracking unit 511 adds the newly detected person to the tracking targets. Specifically, the tracking unit 511 assigns an ROI number not stored in the tracking table 533 to a newly entered customer SC who is the newly detected person, and registers the ROI number in the tracking table 533.

At ACT105, the tracking unit 511 updates information on the locations of the customers SC stored in the tracking table 533, based on the current location of each detected person.

At ACT106, the association unit 512 implemented by the processor 51 determines whether there is a person who has newly entered the interaction range of each transaction processing apparatus 1. Specifically, the association unit 512 determines, for each of the transaction processing apparatuses 1 whose terminal numbers are not stored in the association table 534, whether or not there is a customer SC who has entered the interaction range stored in the settings memory unit 531, based on the location information stored in the tracking table 533. If there is no person who has newly entered the interaction range, the association unit 512 determines NO at ACT106, and proceeds to processing at ACT101. If there is any person who has newly entered the interaction range, the association unit 512 determines YES at ACT106, and proceeds to processing at ACT107.

At ACT107, the association unit 512 registers a new association. Specifically, the processor 51 stores, in the association table 534, a terminal number of a transaction processing apparatus 1 a newly entered person is determined to be present, in association with an ROI number of a customer SC determined to be the newly entered person. Subsequently, the association unit 512 proceeds to processing at ACT101.

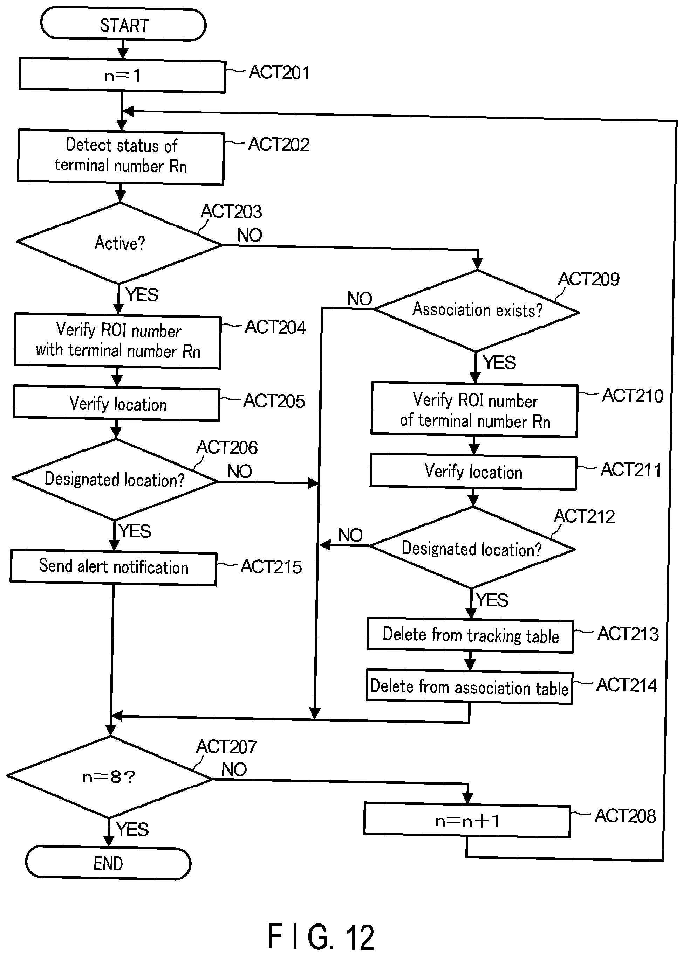

FIG. 12 is a flowchart showing an example of a main procedure for a payment evasion detection process executed by the processor 51 of the monitoring apparatus 5. The processor 51 is configured to execute the process at a predetermined time interval, for example, every few seconds, based on control programs stored in the main memory 52 or the auxiliary storage device 53. The procedure shown in FIG. 12 is an example. The procedure is not particularly limited, as long as similar results can be obtained.

At ACT201, the terminal status detection unit 513 implemented by the processor 51 initializes the value of an unillustrated internal counter n configured in the processor 51 to "1". The value of the internal counter n is used to specify the terminal number of the transaction processing apparatus 1.

At ACT202, the terminal status detection unit 513 retrieves an image of a rotating warning light 111 of a transaction processing apparatus 1 with the terminal number n from video images of a predetermined duration stored in the camera image temporary memory unit 532, and detects a terminal status of the transaction processing apparatus 1 based on status information of the transaction processing apparatus 1 represented by the color pattern and the light emission pattern of the rotating warning light 111.

At ACT203, the terminal status detection unit 513 determines whether or not the detected terminal status is active. If the status is not "active", namely, is "idle", the terminal status detection unit 513 determines NO at ACT203, and proceeds to processing at ACT209. If the status is "active", the terminal status detection unit 513 determines YES at ACT203, and proceeds to processing at ACT204.

At ACT204, the fraud detection unit 514 implemented by the processor 51 verifies, against the association table 534, an ROI number, namely, a customer number, associated with the transaction processing apparatus 1 with the terminal number n.

At ACT205, the fraud detection unit 514 verifies the location of the customer SC with the verified ROI number. Specifically, the fraud detection unit 514 reads, from the tracking table 533, location information corresponding to the verified ROI number.

At ACT206, the fraud detection unit 514 determines whether or not the customer SC has moved to the designated location stored in the settings memory unit 531. Specifically, the fraud detection unit 514 determines whether or not the current location of the customer SC denoted by the verified location information is outside the regulation range RR stored in the settings memory unit 531. The determination may be made based on whether or not the current location of the customer SC denoted by the location information is beyond the designated line. If the customer SC has moved to the designated location, the fraud detection unit 514 determines YES at ACT 206, and proceeds to processing at ACT215. If the customer SC has not moved to the designated location, the fraud detection unit 514 determines NO at ACT 206, and proceeds to processing at ACT207.

At ACT207, the fraud detection unit 514 determines whether or not the value of the internal counter n is "8", namely, whether or not the statuses of all the transaction processing apparatuses 1 included in the self-checkout system have been detected. If the value of the internal counter n is "8", the fraud detection unit 514 determines YES at ACT207, and ends the processing. If the value of the internal counter n is not "8", the fraud detection unit 514 determines NO at ACT207, and proceeds to processing at ACT208.

At ACT208, the terminal status detection unit 513 increments the value of the internal counter n by "+1". Subsequently, the terminal status detection unit 513 proceeds to processing at ACT202.

At ACT209, the terminal status detection unit 513 determines, for the transaction processing apparatus 1 with the terminal number n whose terminal status is determined to be idle, whether there is an association in the association table 534. Specifically, the terminal status detection unit 513 determines whether or not the terminal number n is stored in the association table 534. If there is no association, the terminal status detection unit 513 determines NO at ACT209, and proceeds to processing at ACT207. If there is an association, the terminal status detection unit 513 determines YES at ACT209, and proceeds to processing at ACT210.

At ACT210, the terminal status detection unit 513 verifies, against the association table 534, the ROI number, namely, the customer number, associated with the transaction processing apparatus 1 with the terminal number n.

At ACT211, the terminal status detection unit 513 verifies the location of the customer SC with the verified ROI number. Specifically, the terminal status detection unit 513 reads location information corresponding to the verified ROI number from the tracking table 533.

At ACT212, the terminal status detection unit 513 determines whether the customer SC has moved to the designated location stored in the settings memory unit 531. Specifically, the terminal status detection unit 513 determines whether or not the current location of the customer SC denoted by the verified location information is outside the regulation range RR stored in the settings memory unit 531. The determination may be made based on whether or not the location of the customer SC is beyond the designated line. If the customer SC has not moved to the designated location, the terminal status detection unit 513 determines NO at ACT 212, and proceeds to processing at ACT207. If the customer SC has moved to the designated location, the terminal status detection unit 513 determines YES at ACT 212, and proceeds to processing at ACT213.

At ACT213, the terminal status detection unit 513 deletes, from the tracking table 533, the verified ROI number and the location information corresponding thereto.

At ACT214, the terminal status detection unit 513 deletes the terminal number n stored in the association table 534. Subsequently, the terminal status detection unit 513 proceeds to processing at ACT207 described above.

It is assumed, for example, that the transaction processing apparatus 1 with the terminal number R1 detected at ACT203 is idle and that the terminal number R1 is associated with a customer SC with the ROI number ROI1, as shown in FIG. 9. This corresponds to the situation where the customer SC with the ROI number ROI1 has completed the purchase-related interaction at the transaction processing apparatus 1 with the terminal number R1 and is heading to the exit EXT of the checkout area CA, as shown in FIG. 2. In this case, the processing advances from ACT203 to ACT209, then advances from ACT209 to ACT212 via ACT210 and ACT211, and it is verified that the customer SC in question is present at the designated location at ACT212. Thereafter, through processing at ACT213 and ACT214, a record with the ROI number ROI1 storing the information on the location of the customer SC in question is deleted from the tracking table 533, and the association between the ROI number ROI1 and the terminal number R1, namely, the corresponding record, is deleted from the association table 534.

At ACT215, the fraud detection unit 514 implemented by the processor 51 sends an alert notification to the attendant terminal 3 through the communication interface 54. Subsequently, the fraud detection unit 514 proceeds to processing at ACT207.

It is assumed, for example, that the transaction processing apparatus 1 with the terminal number R1 detected by the processing at ACT203 is "active", and that the terminal number R1 is associated with the customer SC with the ROI number ROI1, as shown in FIG. 9. This corresponds to the situation where the customer SC with the ROI number ROI1 has exited the regulation range RR and is heading to the exit EXT of the checkout area CA, but has not completed the purchase-related interaction at the transaction processing apparatus 1 with the terminal number R1, as shown in FIG. 2. In this case, the processing advances from ACT203 to ACT206 via ACT204 and ACT205, and if it is verified that the customer SC in question has exited the regulation range RR at ACT206, an alert notification is sent at ACT215.

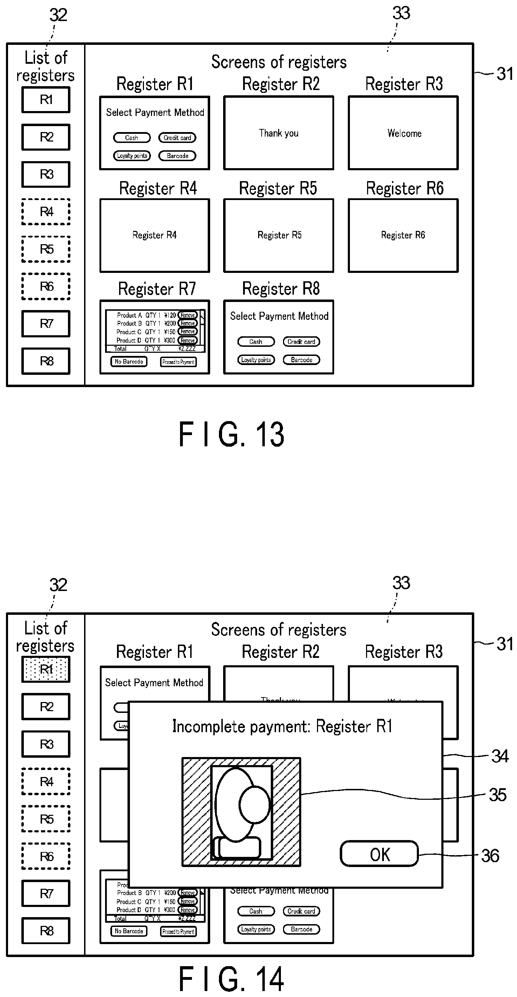

FIG. 13 is a diagram showing an example of a monitoring screen 31 displayed on a touch panel of an attendant terminal 3 that is connected to the communication network NW and equipped with a function of monitoring a plurality of transaction processing apparatuses 1. The monitoring screen 31 includes a terminal list area 32 for displaying, as icons, a list of transaction processing apparatuses 1 being monitored, and a terminal status area 33 displaying contents being displayed on touch panels 104 of the respective transaction processing apparatuses 1. The attendant terminal 3 is configured to receive, from each transaction processing apparatus 1, status information indicating the status of the transaction processing apparatus 1 and display information on contents being displayed on the touch panel 104 of the transaction processing apparatus 1. The attendant terminal 3 is configured to change the color, concentration, or shape of the icons displayed in the terminal list area 32 based on the received status information, thereby distinguishably displaying current statuses of the respective transaction processing apparatuses 1. In the example of FIG. 13, icons indicating that the transaction processing apparatuses 1 with the terminal numbers R1, R2, R3, R7, and R8 are active, and icons indicating that the transaction processing apparatuses 1 with the terminal numbers R4, R5, and R6 are idle are displayed. Also, the attendant terminal 3 is configured to display, in the terminal status area 33, reduced images of the screens of the touch panels 104 based on the received display information displayed on the touch panels 104 of the respective transaction processing apparatuses 1.

FIG. 14 is a diagram showing an example of the monitoring screen 31 upon receiving an alert notification sent from the monitoring apparatus 5. The alert notification includes, as described above, information indicating a transaction processing apparatus 1 where a payment evasion has occurred, and can include an image of a customer SC in question that has been clipped from video images. Upon receiving the alert notification, the attendant terminal 3 superimposes, based on the alert notification, a pop-up alert 34 on the display contents of the transaction processing apparatuses 1 being displayed in the terminal status area 33 of the monitoring screen 31, as shown in FIG. 14. The pop-up alert 34 may include a customer image 35 together with a message indicating at which transaction processing apparatus 1 the payment evasion has occurred. Furthermore, the pop-up alert 34 includes an "OK" button 36 for allowing the shop staff SP as an attendant to input a verification of the occurrence of the payment evasion. As a matter of course, the pop-up alert 34 shown in FIG. 14 is an example. On the attendant terminal 3, in response to receipt of the alert notification, an icon with a terminal number in question displayed in the terminal list area 32, which is, in this example, the icon of the transaction processing apparatus 1 with the terminal number R1, is changed to an icon distinguishably indicating that the payment evasion has occurred, as shown in FIG. 14.

In response to an interaction with the "OK" button 36 in the pop-up alert 34, the attendant terminal 3 sends, based on the alert notification, a terminal status update instruction to the transaction processing apparatus 1 where the payment evasion is determined to have occurred. That is, the interaction with the "OK" button 36 is an example of a predetermined stop interaction to instruct the alert notification to be stopped. As described above, the transaction processing apparatus 1 that has received the terminal status update instruction, which is, in the above-described example, the transaction processing apparatus 1 with the terminal number R1, updates its status to "idle", and changes its rotating warning light 111 to indicate "idle".

In the case where the attendant terminal 3 is a general personal computer or a tablet terminal that is not equipped with a function of monitoring the transaction processing apparatus 1, a display similar to the pop-up alert 34 is presented on its display screen. In this case, the "OK" button 36 acts as a button for instructing ending of the pop-up alert 34. In actuality, to update the status of the transaction processing apparatus 1 and change the indication of its rotating warning light 111, the shop staff SP as an attendant goes to a place where the transaction processing apparatus 1 is installed and carries out a predetermined update interaction.

The attendant terminal 3 is not equipped with a function of monitoring the transaction processing apparatus 1, but may be connected to the communication network NW and equipped with a function of updating the status of the transaction processing apparatus 1, as a matter of course.

By thus updating the status of the transaction processing apparatus 1, the transaction processing apparatus 1 with the terminal number R1 is detected to be "idle" at ACT202 in a subsequent payment evasion detection process executed after passage of a predetermined duration, the processing of the monitoring apparatus 5 proceeds from ACT203 to ACT209. Thereafter, the processing proceeds from ACT209 to ACT212 via ACT210 and ACT211, and it is verified that the customer SC in question is present at the designated location at ACT 212. Thereafter, through processing at ACT213 and ACT214, a record with the ROI number ROI1 storing information on the location of the customer SC in question is deleted from the tracking table 533, and an association between the ROI number ROI1 and the terminal number R1, namely, the corresponding record, is deleted from the association table 534.

As described above, the monitoring apparatus 5 to which the information processing apparatus according to the first embodiment is applied is configured, with the tracking unit 511, to detect, based on image information for identifying respective states of a plurality of transaction processing apparatuses 1 on which customers SC carry out a purchase-related interaction, whether or not each of the transaction processing apparatuses 1 is in a purchase-related interaction completed state. Moreover, the monitoring apparatus 5 is configured to track, with the tracking unit 511, movement of the customers SC, and to associate, with the association unit 512, each of the customers SC with a corresponding transaction processing apparatus 1 on which the customer SC carries out a purchase-related interaction, based on the locations of the customers SC being tracked. Furthermore, the monitoring apparatus 5 is configured to issue, with the fraud detection unit 514, a payment evasion notification if the transaction processing apparatus 1 associated with the customer SC who has moved to a designated location set in advance is not in a purchase-related interaction completed state.

With the above-described monitoring apparatus 5 to which the information processing apparatus according to the first embodiment is applied, it is possible to issue a payment evasion notification with ease, since image information is used to detect whether or not the transaction processing apparatus 1 is in a purchase-related interaction completed state to eliminate the necessity of communicating with the transaction processing apparatus 1, and a payment evasion notification is issued if the customer SC who has moved to the designated location has not completed the purchase-related interaction at the transaction processing apparatus 1 associated with the customer SC.

Conventionally, there is a gate system for handling the payment evasion fraud, in which a gate or the like is installed at an exit of a checkout area and configured to open if a receipt issued by a checkout terminal upon completion of the payment is presented over the gate. However, such a gate system is the high cost and reduces the user experience because of the necessity of presenting a receipt over the gate. Conventionally, there is also an informing system in which status information of a checkout terminal is retrieved through communication with the checkout terminal, and the location of the customer is detected to inform the shop staff or the like if the customer has left the area in which the checkout terminal is installed prior to completion of a checkout process at the checkout terminal. However, in order to connect to a self-checkout system installed in a shop and retrieve status information from the checkout terminal, knowledge about the contents of information exchanged in the self-checkout system is required. Accordingly, there may be a case where the informing system cannot be introduced if the knowledge about the checkout system introduced into the shop is lacking or unobtainable. On the other hand, the monitoring apparatus 5 to which the information processing apparatus according to the first embodiment is applied eliminates the necessity of communicating with the transaction processing apparatus 1, and is thus applicable to the shop even if knowledge about the checkout system itself introduced in the shop is lacking or unobtainable.

The monitoring apparatus 5 according to the first embodiment is configured to issue a payment evasion notification with the fraud detection unit 514 once the customer SC associated with the transaction processing apparatus 1 which has been detected not to be in a purchase-related interaction completed state has moved to a designated location.

Thus, with the monitoring apparatus 5 according to the first embodiment, since payment evasion determination is carried out not for all the customers SC who have entered the checkout area CA, but only for customers SC associated with transaction processing apparatuses 1, it is possible to reduce the processing amount. Also, since payment evasion determination is not performed for customers SC and shop staffs SP who are not associated with the transaction processing apparatuses 1, it is possible to suppress an occurrence of false notification. Normally, as an attendant, a shop staff SP is paying particularly careful attention to a customer SC who has entered the checkout area CA and is attempting to leave the checkout area CA without interaction with a transaction processing apparatus 1, and thus there is a low probability that a problem will arise by eliminating the monitoring by the monitoring apparatus 5.

Also, the monitoring apparatus 5 according to the first embodiment is configured to detect, with the terminal status detection unit 513, whether or not a transaction processing apparatus 1 is in a purchase-related interaction completed state, based on an image of a rotating warning light 111 of the transaction processing apparatus 1 included in image information obtained by photographing the rotating warning light 111 configured to display whether or not the transaction processing apparatus 1 is in the purchase-related interaction completed state.

Thus, with the monitoring apparatus 5 according to the first embodiment, it is possible to detect the state of the transaction processing apparatus 1 without communicating with the transaction processing apparatus 1, by discerning the state of the transaction processing apparatus 1 indicated by the rotating warning light 111.

Moreover, the information processing system according to the first embodiment applied to the self-checkout system includes: an attendant terminal 3 used by a shop staff; a checkout area camera 4 configured to retrieve image information for identifying respective states of a plurality of transaction processing apparatuses 1 on which customers SC carry out a purchase-related interaction; and a monitoring apparatus 5 according to the first embodiment configured to communicate with the attendant terminal 3 and the checkout area camera 4, and the monitoring apparatus 5 is configured to detect, with the terminal status detection unit 513, whether or not each of the plurality of transaction processing apparatuses 1 is in a purchase-related interaction completed state, based on the image information retrieved by the checkout area camera 4, and to issue, with the fraud detection unit 514, a payment evasion notification to the attendant terminal 3 if a state of the transaction processing apparatus 1 associated with the customer SC who has moved to a designated location set in advance is not a purchase-related interaction completed state.

With the above-described information processing system according to the first embodiment, it is possible to issue a payment evasion notification with ease, since image information is used to detect whether or not the transaction processing apparatus 1 is in a purchase-related interaction completed state to eliminate the necessity of communicating with the transaction processing apparatus 1, and a payment evasion notification is issued if a customer SC who has moved to the designated location has not completed a purchase-related interaction at the transaction processing apparatus 1 associated with the customer SC.

Moreover, in the information processing system according to the first embodiment, the monitoring apparatus 5 is configured to track movement of the customers SC with the tracking unit 511 based on video images captured by the checkout area camera 4.

This eliminates the necessity of preparing a separate camera for tracking movement of the customers SC, other than the checkout area camera 4, thus making it possible to construct the information processing system at a low cost.

### [Second Embodiment]

Next, a second embodiment will be described. The configurations and operations similar to those of the first embodiment will be assigned the same reference numerals to omit explanations of such configurations and operations.

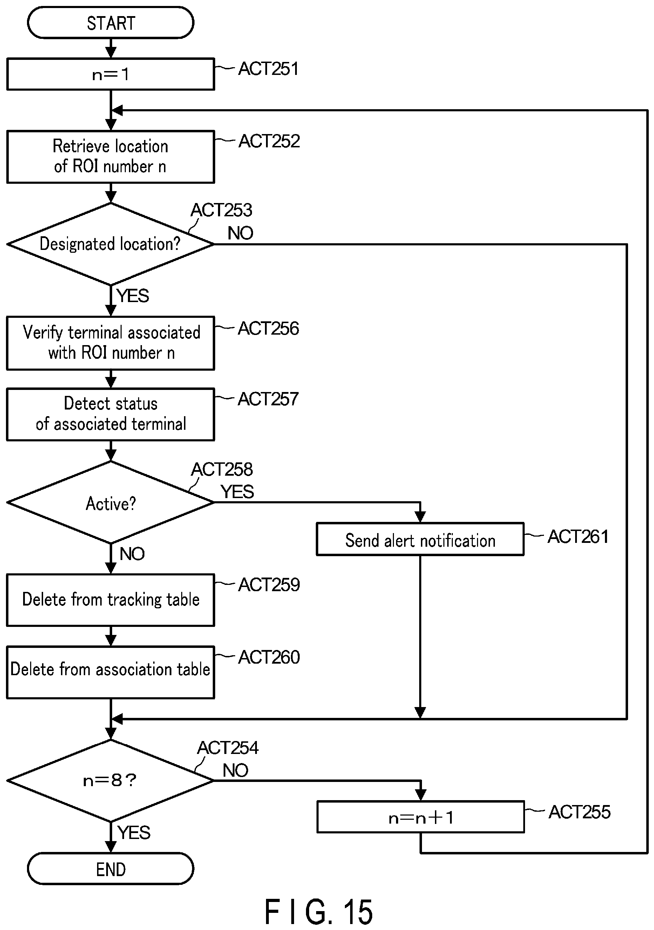

FIG. 15 is a flowchart showing an example of a main procedure for a payment evasion detection process executed by the processor 51 of the monitoring apparatus 5 to which an information processing apparatus according to the second embodiment is applied. The processor 51 is configured to execute the process at a predetermined time interval, for example, every few seconds, based on control programs stored in the main memory 52 or the auxiliary storage device 53. The procedure shown in FIG. 15 is an example. The procedure is not particularly limited, as long as similar results can be obtained.

At ACT251, the terminal status detection unit 513 implemented by the processor 51 initializes the value of an internal counter n to "1". In the present embodiment, the value of the internal counter n is used to specify the ROI number.

At ACT252, the terminal status detection unit 513 retrieves information on the location of a customer SC with the ROI number labeled "n", namely, "ROIn". Specifically, the terminal status detection unit 513 reads information on the location of the customer SC with "ROIn" from the tracking table 533.

At ACT253, the terminal status detection unit 513 determines whether or not the customer SC has moved to a designated location stored in the settings memory unit 531. Specifically, the terminal status detection unit 513 determines whether or not the current location of the customer SC denoted by the retrieved location information is outside the regulation range RR stored in the settings memory unit 531. The determination may be made based on whether or not the current location of the customer SC denoted by the location information is beyond the designated line. If the customer SC has moved to the designated location, the terminal status detection unit 513 determines YES at ACT 253, and proceeds to processing at ACT256. If the customer SC has not moved to the designated location, the terminal status detection unit 513 determines NO at ACT 253, and proceeds to processing at ACT254.

At ACT254, the terminal status detection unit 513 determines whether or not the value of the internal counter n is "8", namely, whether or not the statuses of all the transaction processing apparatuses 1 included in the self-checkout system have been detected. If the value of the internal counter n is "8", the terminal status detection unit 513 determines YES at ACT254, and ends the processing. If the value of the internal counter n is not "8", the terminal status detection unit 513 determines NO at ACT254, and proceeds to processing at ACT255.

At ACT255, the terminal status detection unit 513 increments the value of the internal counter n by "+1". Subsequently, the terminal status detection unit 513 proceeds to processing at ACT252.

At ACT256, the fraud detection unit 514 implemented by the processor 51 verifies, against the association table 534, the terminal number of the transaction processing apparatus 1 associated with the customer SC with the ROI number labeled "n".

At ACT257, the fraud detection unit 514 retrieves an image of a rotating warning light 111 of a transaction processing apparatus 1 corresponding to the verified terminal number from video images of a predetermined duration stored in the camera image temporary memory unit 532, and detects a terminal status of the transaction processing apparatus 1 based on status information of the transaction processing apparatus 1 represented by the color pattern and the light emission pattern of the rotating warning light 111.

At ACT258, the fraud detection unit 514 determines whether or not the detected terminal status is active. If the status is "active", the fraud detection unit 514 determines YES at ACT258, and proceeds to processing at ACT261. If the status is not "active", namely, is "idle", the fraud detection unit 514 determines NO at ACT258, and proceeds to processing at ACT259.

At ACT259, the fraud detection unit 514 deletes, from the tracking table 533, the ROI number labeled "n", namely, "ROIn", and location information corresponding thereto. That is, the fraud detection unit 514 deletes a record of "ROIn".

At ACT260, the fraud detection unit 514 deletes, from the tracking table 534, the ROI number labeled "n", namely, "ROIn", and a terminal number corresponding thereto. That is, the fraud detection unit 514 deletes a record of "ROIn". Subsequently, the terminal status detection unit 513 proceeds to processing at ACT254.

At ACT261, the fraud detection unit 514 sends an alert notification to the attendant terminal 3 through the communication interface 54. Subsequently, the fraud detection unit 514 proceeds to processing at ACT254.

As described above, the monitoring apparatus 5 to which the information processing apparatus according to the second embodiment is applied is configured to detect, with the terminal status detection unit 513, once a customer SC being tracked has moved to a designated location, a state of a transaction processing apparatus 1 associated with the customer SC, and to issue, with the fraud detection unit 514, a payment evasion notification if the transaction processing apparatus 1 associated with the customer SC who has moved to the designated location is not in a purchase-related interaction completed state.

With the above-described monitoring apparatus 5 to which the information processing apparatus according to the second embodiment is applied, since payment evasion determination is carried out not for all the transaction processing apparatuses 1 provided in the checkout area CA, but only for the transaction processing apparatus 1 associated with the customer SC who has moved to the designated location, it is possible to reduce the processing amount. Also, since payment evasion determination is not performed for customers SC and shop staffs SP who are not associated with the transaction processing apparatuses 1, it is possible to suppress an occurrence of false notification. Normally, as an attendant, a shop staff SP is paying particularly careful attention to a customer SC who has entered the checkout area CA and is attempting to leave the checkout area CA without interaction with a transaction processing apparatus 1, and thus there is a low probability that a problem will arise by eliminating the monitoring by the monitoring apparatus 5.

### [Third Embodiment]

The monitoring apparatus 5 to which the information processing apparatus according to the first and second embodiments are applied is configured to determine the current status of each transaction processing apparatus 1 based on an indication state of the rotating warning light 111. In the present embodiment, a target of determination other than the rotating warning light 111 is used for determination of the current status of each transaction processing apparatus 1. Specifically, the target of determination in the present embodiment is the display screen of the touch panel 104 of each transaction processing apparatus 1. Hereinafter, an example will be described in which the transaction processing apparatus 1 is a self-service POS terminal 100; however, the transaction processing apparatus 1 may be a self-checkout terminal 150, as a matter of course.

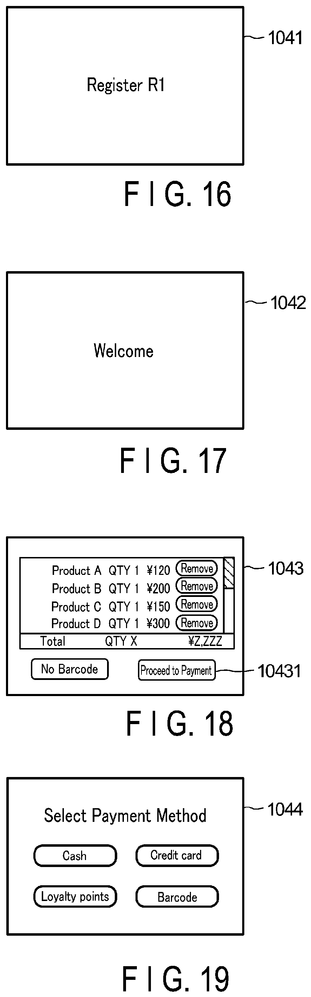

FIG. 16 is a diagram showing an example of an idle screen 1041 displayed on the touch panel 104 of the self-service POS terminal 100 as an example of the transaction processing apparatus 1 according to the third embodiment. If the self-service POS terminal 100 is vacant, a prescribed idle screen 1041 to that effect is displayed on the touch panel 104. The idle screen 1041 includes, as shown in FIG. 16, for example, a display showing, to a customer SC, a terminal number of the self-service POS terminal 100.

FIG. 17 is a diagram showing an example of a transaction start screen 1042 displayed on the touch panel 104 of the self-service POS terminal 100. If, for example, a customer SC touches the touch panel 104, the screen switches from the idle screen 1041 shown in FIG. 16 to the transaction start screen 1042.

FIG. 18 is a diagram showing an example of a registration screen 1043 displayed on the touch panel 104 of the self-service POS terminal 100. The registration screen 1043 displays a list of registered products, their prices, and the like.

FIG. 19 is a diagram showing an example of a payment selection screen 1044 displayed on the touch panel 104 of the self-service POS terminal 100. If a touch interaction is made on a "Proceed to payment" button 10431 included in the registration screen 1043 shown in FIG. 18, the screen is switched to the payment selection screen 1044.

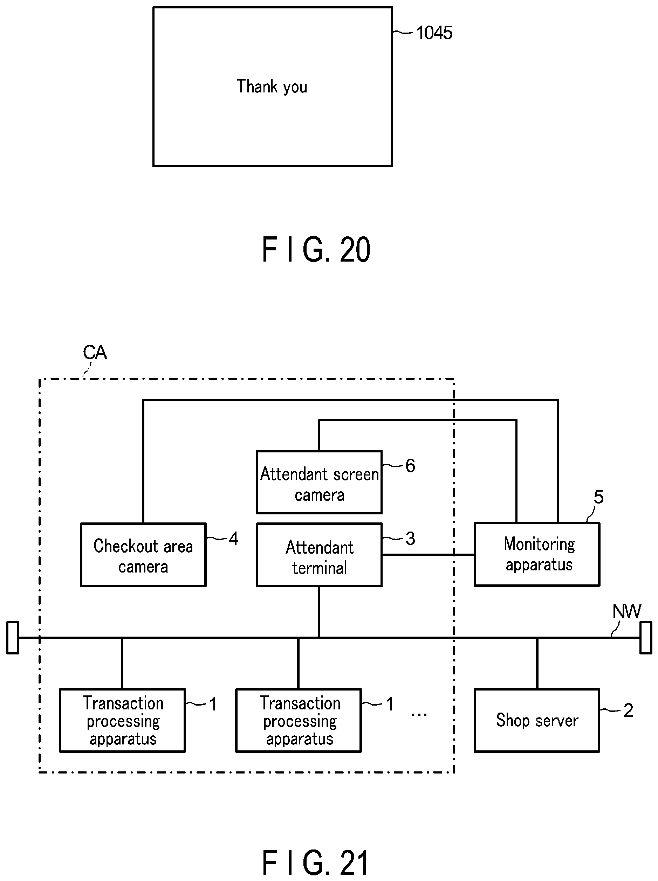

FIG. 20 is a diagram showing an example of a transaction end screen 1045 displayed on the touch panel 104 of the self-service POS terminal 100. After the purchase at the transaction processing apparatus 1 ends, the transaction end screen 1045 is displayed. The transaction end screen 1045 is displayed for a predetermined duration, and then returns to the idle screen 1041 shown in FIG. 16.

In the present embodiment, an image of the display screen of the touch panel 104 of each transaction processing apparatus 1 is clipped from video images captured by the checkout area camera 4, and the current situation of the transaction processing apparatus 1 is determined based on what image is being displayed.

Specifically, if the touch panel 104 is displaying the idle screen 1041, the terminal status detection unit 513 of the monitoring apparatus 5 determines that the transaction processing apparatus 1 is idle. If the display of the touch panel 104 is switched from the idle screen 1041 to the transaction start screen 1042, the terminal status detection unit 513 determines that the transaction processing apparatus 1 has become active. If the display on the touch panel 104 is the registration screen 1043, the payment selection screen 1044, an unillustrated purchasing screen, or the like, the terminal status detection unit 513 determines that the transaction processing apparatus 1 is active. If the display on the touch panel 104 is switched to the transaction end screen 1045, the terminal status detection unit 513 may be configured to determine that the self-service POS terminal 100 has become idle, immediately without waiting for the display to switch to the idle screen 1041, or after passage of a predetermined duration.

In this manner, the touch panel 104 is an example of a display member included in the transaction processing apparatus 1 and configured to display whether or not the transaction processing apparatus 1 is in a purchase-related interaction completed state. The touch panel 104 can be said to be an example of a display member configured to display whether or not the transaction processing apparatus 1 is idle or active by means of at least one of characters or symbols.

The monitoring apparatus 5 is specifically configured, at ACT202 and ACT257, to extract a segment of the display screen of the touch panel 104, not a segment of the rotating warning light 111, from video images, and detect a status of the transaction processing apparatus 1 based on the display status of the display screen.

In the first and second embodiments, video of a predetermined duration was required to discern whether the rotating warning light 111 is emitting a blinking light or a steady light; however, a one-shot image may be used in the present embodiment.

As described above, the monitoring apparatus 5 applied to the information processing apparatus according to the third embodiment is configured to detect, with the terminal status detection unit 513, whether or not a transaction processing apparatus 1 is in a purchase-related interaction completed state, based on an image of a display screen of a touch panel 104 of the transaction processing apparatus 1, which is included in image information obtained by photographing the display screen of the touch panel 104 configured to display whether or not the transaction processing apparatus 1 is in the purchase-related interaction completed state.

Thus, with the monitoring apparatus 5 to which the information processing apparatus according to the third embodiment is applied, it is possible to determine the state of the transaction processing apparatus 1 by photographing the touch panel 104 which is displaying the state of the transaction processing apparatus 1.

Note that the touch panel 104 displays the state of the transaction processing apparatus 1 by means of at least one of letters or symbols such as buttons.

Thus, with the monitoring apparatus 5 according to the third embodiment, it is possible to determine the state of the transaction processing apparatus 1 with ease, by simply discerning the letters and/or symbols displayed on the screen of the touch panel 104.

### [Fourth Embodiment]

In the third embodiment, the target of determination was the display screen of the touch panel 104 of each transaction processing apparatus 1; however, the target of determination in the present embodiment is the display screen of the touch panel included in the attendant terminal 3.

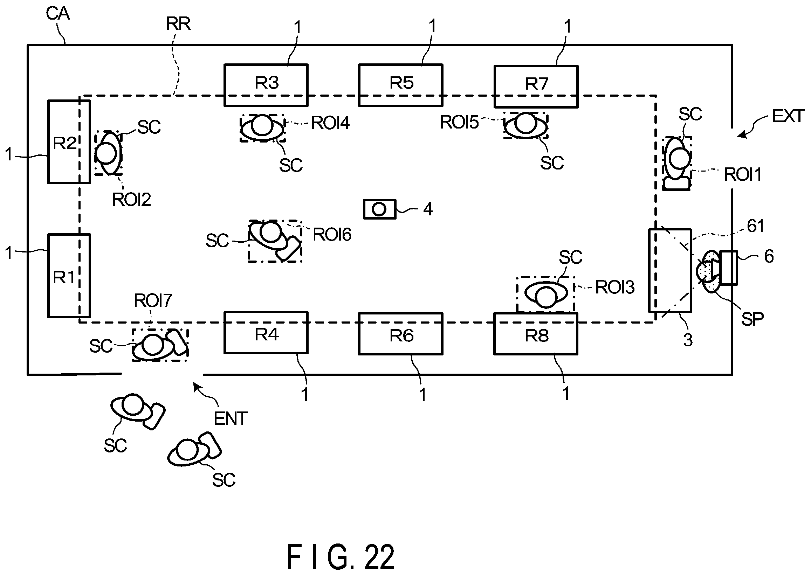

FIG. 21 is a schematic configuration diagram showing a self-checkout system to which an information processing system according to a fourth embodiment, including a monitoring apparatus 5 to which the information processing apparatus according to the fourth embodiment is applied, is applied. FIG. 22 is a schematic diagram showing an example of a checkout area CA in a shop according to the fourth embodiment.

In the present embodiment, the attendant terminal 3 is connected to a communication network NW and equipped with a function of monitoring a plurality of transaction processing apparatuses 1. As shown in FIGS. 21 and 22, the information processing system according to the fourth embodiment includes, in addition to the checkout area camera 4, an attendant screen camera 6 installed in such a manner that its imaging range 61 acts as a display screen of the touch panel of the attendant terminal 3. The attendant screen camera 6 sends captured images to the monitoring apparatus 5.

On the display screen of the touch panel of the attendant terminal 3 equipped with the function of monitoring the transaction processing apparatuses 1, a monitoring screen 31 as shown in FIG. 13 is displayed. As described above, the attendant terminal 3 is configured to change the color, concentration, and/or shape of the icons displayed in the terminal list area 32 of the monitoring screen 31 based on status information received from each transaction processing apparatus 1, and thereby distinguishably displays current statuses of the respective transaction processing apparatuses 1.

In the present embodiment, the monitoring screen 31 being displayed on the touch panel 104 of the attendant terminal 3 is photographed with the attendant screen camera 6. The terminal status detection unit 513 of the monitoring apparatus 5 is configured to clip, from the images captured by the attendant screen camera 6, an image indicating the status of the transaction processing apparatus 1 listed as a target of detection in the terminal list area 32, and determine the current status of the transaction processing apparatus 1 listed as the target of detection. By making the locational relationship between the attendant screen camera 6 and the monitoring screen 31 of the attendant terminal 3 fixed, which pixel in the captured image corresponds to which icon of the transaction processing apparatus 1 can be known in advance. If the locational relationship is not fixed, the monitoring apparatus 5 can be configured to discern the terminal list area 32 by a known image recognition process to detect which pixel in the captured image corresponds to which icon of the transaction processing apparatus 1. As a matter of course, an image of the terminal status area 33 can be used in place of the image of the terminal list area 32 to determine the current status of the transaction processing apparatus 1, or both the image of the terminal list area 32 and the image of the terminal status area 33 can be used to further improve the precision of determination.

In this manner, the attendant terminal 3 is an example of an attendant terminal configured display the respective states of the transaction processing apparatuses 1 through communication with each of the transaction processing apparatuses 1, and the touch panel of the attendant terminal configured to display the monitoring screen 31 is an example of a display screen configured to display the respective states of the transaction processing apparatuses 1. The attendant screen camera 6 is an example of a retrieving apparatus configured to retrieve image information for identifying respective states of a plurality of transaction processing apparatuses 1.

The monitoring apparatus 5 is specifically configured, at ACT202 and ACT257, to extract, from an image captured by the attendant screen camera 6, an image segment such as an icon related to the transaction processing apparatus 1 listed as the target of detection on the monitoring screen 31 being displayed on the touch panel of the attendant terminal 3, and to detect the status of the transaction processing apparatus 1 based on the contents being displayed in the image segment.

As described above, the monitoring apparatus 5 to which the information processing apparatus according to the fourth embodiment is applied is configured to detect, with the terminal status detection unit 513, whether or not each of a plurality of transaction processing apparatuses 1 is in a purchase-related interaction completed state, based on an image indicating respective states of the plurality of transaction processing apparatuses 1 included in image information obtained by photographing a monitoring screen 31 of an attendant terminal 3 on which the respective states of the plurality of transaction processing apparatuses 1 are being displayed, the attendant terminal 3 being configured to display the respective states of the transaction processing apparatuses 1 through communication with each of the transaction processing apparatuses 1.

Thus, with the monitoring apparatus 5 to which the information processing apparatus according to the fourth embodiment is applied, it is possible to determine the state of each transaction processing apparatus 1 with ease, by photographing the monitoring screen 31 of the attendant terminal 3 on which the states of the respective transaction processing apparatuses 1 are being displayed.

### [Other Embodiments]

Embodiments of the information processing apparatus are not limited to those described above.

For example, in the first to third embodiments, video of the rotating warning light 111 or the touch panel 104 of each transaction processing apparatus 1 is clipped from video images of the checkout area camera 4; however, each transaction processing apparatus 1 may be configured to include a camera for photographing the rotating warning light 111 or the touch panel 104.

The state of each transaction processing apparatus 1 in the video images captured by the checkout area camera 4 based on which the transaction processing apparatus 1 is detected not to be in a purchase-related interaction completed state is not limited to the conditions described in the embodiments, and may be freely set by a manager of the monitoring apparatus 5 as the information processing apparatus.

Moreover, the information processing apparatus is not limited to the monitoring apparatus 5, and its functions may be equipped in the attendant terminal 3 or a computer configuring the shop server 2. Furthermore, a server computer provided on a cloud may be used as the information processing apparatus by connecting an Internet connection device to the communication network NW.

The program that enables a computer to function as an information processing apparatus according to the embodiments may be transferred in a state of being stored in an electronic device or in a state of not being stored in an electronic device. In the latter case, the program may be transferred via a network or may be transferred in a state of being stored in a recording medium. The recording medium is a non-transitory tangible medium. The recording medium is a computer-readable medium. The recording medium may be of any type, such as a CD-ROM or a memory card, as long as it can store programs and can be read by the computer.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such embodiments or modifications as would fall within the scope and spirit of the invention.

## Claims

1. An information processing apparatus, comprising:
a detection unit configured to detect, based on image information for identifying respective states of a plurality of transaction processing apparatuses on which customers carry out a purchase-related interaction, whether or not each of the plurality of transaction processing apparatuses is in a completed state of the purchase-related interaction;
a tracking unit configured to track movement of the customers;
an association unit configured to associate, based on locations of the customers being tracked, each of the customers with a corresponding one of the transaction processing apparatuses on which the customer carries out the purchase-related interaction; and
a notification unit configured to issue a payment evasion notification if a state of the transaction processing apparatus associated with the customer who has moved to a designated location set in advance is not the completed state of the purchase-related interaction.

2. The information processing apparatus according to claim 1, wherein
the notification unit is configured to issue the payment evasion notification once the customer associated with the transaction processing apparatus which has been detected not to be in the completed state of the purchase-related interaction has moved to the designated location.

3. The information processing apparatus according to claim 1, wherein
the detection unit is configured to detect, once the customer being tracked has moved to the designated location, the state of the transaction processing apparatus associated with the customer, and
the notification unit is configured to issue the payment evasion notification if the transaction processing apparatus associated with the customer who has moved to the designated location is not in the completed state of the purchase-related interaction.

4. The information processing apparatus according to any one of claims 1 to 3, wherein
the detection unit is configured to detect, based on an image of a display member included in each of the transaction processing apparatuses and configured to display whether or not the transaction processing apparatus is in the completed state of the purchase-related interaction, whether or not the transaction processing apparatus is in the completed state of the purchase-related interaction, the image of the display member being included in the image information obtained by photographing the display member.

5. The information processing apparatus according to any one of claims 1 to 3, wherein
the detection unit is configured to detect whether or not each of the transaction processing apparatuses is in the completed state of the purchase-related interaction, based on an image indicating the respective states of the plurality of transaction processing apparatuses, the image being included in the image information obtained by photographing a display screen of an attendant terminal on which the respective states of the plurality of transaction processing apparatuses are being displayed, the attendant terminal being configured to display the respective states of the plurality of transaction processing apparatuses through communication with each of the transaction processing apparatuses.

6. An information processing system, comprising:
an attendant terminal used by a shop staff;
a retrieving apparatus configured to retrieve image information for identifying respective states of a plurality of transaction processing apparatuses on which customers carry out a purchase-related interaction; and
an information processing apparatus configured to communicate with the attendant terminal and the retrieving apparatus, wherein
the information processing apparatus includes:
a detection unit configured to detect, based on the image information retrieved by the retrieving apparatus, whether or not each of the plurality of transaction processing apparatuses is in a completed state of the purchase-related interaction;
a tracking unit configured to track movement of the customers;
an association unit configured to associate, based on locations of the customers being tracked, each of the customers with a corresponding one of the transaction processing apparatuses on which the customer carries out the purchase-related interaction; and
a notification unit configured to issue a payment evasion notification to the attendant terminal if a state of the transaction processing apparatus associated with the customer who has moved to a designated location set in advance is not the completed state of the purchase-related interaction.

7. A computer-readable storage medium storing thereon a program for causing a computer of an information processing apparatus to realize functions of:
detecting, based on image information for identifying respective states of a plurality of transaction processing apparatuses on which customers carry out a purchase-related interaction, whether or not each of the plurality of transaction processing apparatuses is in a completed state of the purchase-related interaction;
tracking movement of the customers;
associating, based on locations of the customers being tracked, each of the customers with a corresponding one of the transaction processing apparatuses on which the customer carries out the purchase-related interaction; and
issuing a payment evasion notification if a state of the transaction processing apparatus associated with the customer who has moved to a designated location set in advance is not the completed state of the purchase-related interaction.
